# EUROPEAN PATENT SPECIFICATION

(11) **EP 3 332 676 B1**
(45) Date of publication and mention of the grant of the patent: **18.11.2020**
(21) Application number: 16911458.4
(22) Date of filing: 23.09.2016
(51) Int. Cl.: A47J 27/086

(54) **ELECTRIC PRESSURE COOKER**
ELEKTRISCHER DRUCKKOCHTOPF
AUTOCUISEUR ÉLECTRIQUE

(30) Priority: 03.08.2016 CN 201610634895; 03.08.2016 CN 201610634893; 03.08.2016 CN 201620841271 U; 03.08.2016 CN 201620841233 U; 03.08.2016 CN 201620840768 U; 03.08.2016 CN 201620840766 U; 03.08.2016 CN 201610634864; 03.08.2016 CN 201610634863; 03.08.2016 CN 201610634892; 03.08.2016 CN 201620838599 U
(43) Date of publication of application: 13.06.2018
(73) Proprietor: Foshan Shunde Midea Electrical Heating Appliances Manufacturing Co. Ltd., Foshan, Guangdong 528311 (CN)
(72) Inventor: SONG, Yanping, Foshan Guangdong 528311 (CN); SU, Chang, Foshan Guangdong 528311 (CN)
(74) Representative: RGTH
(86) International application number: PCT/CN2016/099924
(87) International publication number: WO 2018/023863

(56) References cited:
- CN-A- 105 310 470
- CN-B- 103 006 045
- CN-B- 103 445 669
- CN-U- 202 408 455
- CN-U- 203 168 843
- CN-U- 203 436 162
- CN-U- 203 987 551
- CN-Y- 2 751 708
- CN-Y- 201 286 616
- US-B1- 6 283 014

## Description

### FIELD

The present disclosure relates to a technical field of electric appliance manufacturing, and more particularly to an electric pressure cooker.

### BACKGROUND

In a pressure cooker in the related art, an electric heating plate having a heating tube is provided to an outer pot so as to heat an inner pot. Adopting this heating method causes a very high thermal inertia and a poor controllability in temperature and pressure, thus resulting in a low pressure control precision of the pressure cooker, and hence influencing a cooking effect.

In the document CN 203 987 551 U an electric pressure cooker is already described. The pressure cooker comprises an outer pot with annular strut members, that can move up and down and a coil panel, which is arranged below the annular strut members and to which a bottom opening of the outer pot is adapted.

### SUMMARY

Embodiments of the present disclosure seek to solve at least one of the problems existing in the related art to at least some extent. For this reason, the present disclosure provides an electric pressure cooker, which has advantages of a low thermal inertia, a good controllability, a high production efficiency, a good heating effect and a high reliability.

To achieve the above objective, an electric pressure cooker is provided according to embodiments of the present disclosure. The electric pressure cooker includes an outer pot provided with a support rib at a lower end of the outer pot; a supporting member disposed in the outer pot and supported on the support rib; an inner pot disposed in the outer pot and supported on the supporting member, and an outer bottom surface of the inner pot being spaced apart from an inner bottom surface of the outer pot, under support of the supporting member; and an electromagnetic heating device configured to heat the inner pot, and disposed between the outer bottom surface of the inner pot and the inner bottom surface of the outer pot. The electromagnetic heating device according to the present invention includes an electromagnetic heating plate, wherein the electromagnetic heating plate includes a coil plate provided with a coil slot therein; a coil fitted in the coil slot; and a magnetic stripe disposed to the coil plate, and a projection of the electromagnetic heating plate in a horizontal direction is staggered with a projection of the supporting member in the horizontal direction.

The electric pressure cooker according to embodiments of the present disclosure has advantages of a low thermal inertia, a good controllability, a high production efficiency, a good heating effect and a high reliability.

In addition, the electric pressure cooker according to the above embodiments of the present disclosure may have following additional technical features.

According to an embodiment of the present disclosure, the supporting member is configured as a rigid supporting member.

According to an embodiment of the present disclosure, the rigid supporting member includes a plurality of supporting pillars arranged along a circumferential direction of the inner pot and spaced apart from one another.

According to an embodiment of the present disclosure, an outer circumferential edge of the outer bottom surface of the inner pot is supported on the plurality of supporting pillars.

According to an embodiment of the present disclosure, the rigid supporting member further includes a connecting ring extending in the circumferential direction of the inner pot and respectively connected with the plurality of supporting pillars, and the electromagnetic heating device is fitted in the connecting ring.

According to an embodiment of the present disclosure, the plurality of supporting pillars are connected to a lower surface of the connecting ring, and the inner pot is supported on the connecting ring.

According to an embodiment of the present disclosure, the rigid supporting member is configured as an annular supporting boss extending in the circumferential direction of the inner pot, and the electromagnetic heating device is fitted in the annular supporting boss.

According to an embodiment of the present disclosure, an inner bottom wall of the outer pot is provided with a supporting-member positioning groove, and the rigid supporting member is fitted in the supporting-member positioning groove.

According to an embodiment of the present disclosure, the electric pressure cooker further includes a fan, the housing is provided with an air inlet and an air outlet, and the fan is disposed between an inner surface of the housing and an outer surface of the outer pot.

According to an embodiment of the present disclosure, a bottom wall of the outer pot is provided with a heat dissipation opening, and the fan is disposed between the bottom wall of the outer pot and a bottom wall of the housing.

According to an embodiment of the present disclosure, a sectional area of the heat dissipation opening is larger than 1500 square millimeters.

According to an embodiment of the present disclosure, a ventilation notch is provided at a junction between a circumferential wall and a bottom wall of the outer pot.

According to an embodiment of the present disclosure, a depth of the ventilation notch in a vertical direction is less than 90 millimeters, and a width of the ventilation notch in a circumferential direction of the outer pot is less than 200 millimeters.

According to an embodiment of the present disclosure, a distance between the fan and the bottom wall of the outer pot is less than or equal to 150 millimeters.

According to an embodiment of the present disclosure, the electric pressure cooker further includes a power supply board, the power supply board is located between an outer circumferential wall of the outer pot and an inner circumferential wall of the housing and is arranged adjacent to the fan.

According to an embodiment of the present disclosure, an end of the power supply board adjacent to the fan is provided with a cooling fin.

According to an embodiment of the present disclosure, the power supply board is oriented in the vertical direction, and the cooling fin extends from the power supply board to the housing.

According to an embodiment of the present disclosure, the housing is provided with a wind deflector, the wind deflector is oriented in the vertical direction and spaced apart from the cooling fin.

According to an embodiment of the present disclosure, a distance between the wind deflector and the cooling fin is less than or equal to 30 millimeters.

According to an embodiment of the present disclosure, the fan is located above the air inlet.

According to an embodiment of the present disclosure, the housing includes a base, the air inlet and the air outlet both are provided to the base and respectively adjacent to two ends of the base.

According to an embodiment of the present disclosure, the housing is provided with a supporting foot at a bottom thereof, and a length of the supporting foot away from a lower surface of the housing is 1-75 millimeters.

According to an embodiment of the present disclosure, an inner circumferential edge of the heat dissipation opening is provided with an upper turn-up.

According to an embodiment of the present disclosure, a height of the upper turn-up in the vertical direction is 1-15 millimeters.

According to an embodiment of the present disclosure, an elastic member is provided below the supporting member, and the supporting member is supported on the elastic member.

According to an embodiment of the present disclosure, the elastic member is configured to be deformed when a pressure in the inner pot reaches a pre-determined value, so as to release the pressure in the inner pot.

According to an embodiment of the present disclosure, the elastic member is configured to be deformed to move the inner pot downwards when the pressure in the inner pot reaches the pre-determined value.

According to an embodiment of the present disclosure, the circumferential wall of the outer pot is provided with a circumferential-wall reinforcing rib, the bottom wall of the outer pot is provided with a bottom-wall reinforcing rib, two ends of the elastic member are respectively supported on the bottom-wall reinforcing rib and the supporting member is supported at a center of the elastic member in a length direction of the elastic member.

According to an embodiment of the present disclosure, the elastic member has a plate shape and a width of the elastic member is gradually increased from two ends of the elastic member to a middle of the elastic member.

According to an embodiment of the present disclosure, the supporting member is provided with a mounting hole, the outer pot is provided with an outer-pot through hole, the elastic member is provided with an elastic-member through hole, and the supporting member is mounted to the outer pot through a threaded fastener fitted in the mounting hole, the outer-pot through hole and the elastic-member through hole.

According to an embodiment of the present disclosure, a height of the bottom-wall reinforcing rib away from the bottom wall of the outer pot is less than 30 millimeters.

According to an embodiment of the present disclosure, the outer pot is formed by stamping a cold-rolled sheet, and a thickness of the cold-rolled sheet is 0.4-2 millimeters.

According to an embodiment of the present disclosure, the electromagnetic heating plate is spaced apart from at least one of the inner bottom surface of the outer pot and the outer bottom surface of the inner pot.

According to an embodiment of the present disclosure, the electromagnetic heating plate is spaced apart from the inner bottom surface of the outer pot and the outer bottom surface of the inner pot respectively, and is more adjacent to the outer bottom surface of the inner pot with respect to the inner bottom surface of the outer pot.

According to an embodiment of the present disclosure, the electromagnetic heating device further includes a holder, the holder is disposed between the outer bottom surface of the inner pot and the inner bottom surface of the outer pot, the supporting member is disposed to the holder, and the electromagnetic heating plate is provided to the holder.

According to an embodiment of the present disclosure, the holder is provided with mounting holes spaced apart from one another in a circumferential direction of the holder, and the supporting member is fitted in the mounting hole.

According to an embodiment of the present disclosure, the electromagnetic heating plate further includes a magnetic-stripe fixing frame, the magnetic-stripe fixing frame is mounted to the coil plate, and the magnetic stripe is mounted to the magnetic-stripe fixing frame.

According to an embodiment of the present disclosure, the coil plate and the holder are integrally molded.

According to an embodiment of the present disclosure, the coil plate is connected to the holder through a threaded fastener.

According to an embodiment of the present disclosure, the magnetic-stripe fixing frame is provided with a magnetic-stripe mounting groove, the coil plate is provided with a magnetic-stripe positioning groove, the magnetic stripe is provided with a positioning protrusion, the magnetic stripe is fitted in the magnetic-stripe mounting groove and the positioning protrusion is fitted in the magnetic-stripe positioning groove.

According to an embodiment of the present disclosure, the positioning protrusion includes an inner positioning protrusion and an outer positioning protrusion respectively located at two ends of the magnetic stripe, the magnetic-stripe positioning groove includes an inner positioning groove disposed adjacent to a center of the coil plate and an outer positioning groove disposed adjacent to an outer circumferential edge of the coil plate, the inner positioning protrusion is fitted in the inner positioning groove and the outer positioning protrusion is fitted in the outer positioning groove.

According to an embodiment of the present disclosure, an outer edge of the magnetic-stripe fixing frame is provided with a relief groove for escaping the supporting member.

According to an embodiment of the present disclosure, an upper surface of the holder is provided with a decoration cover, and the decoration cover is provided with a through hole for escaping the supporting member.

### BRIEF DESCRIPTION OF THE DRAWINGS

Fig. 1 is a sectional view of an electric pressure cooker according to embodiments of the present disclosure.
Fig. 2 is a schematic view of a supporting member and an electromagnetic heating device of an electric pressure cooker according to a specific embodiment of the present disclosure.
Fig. 3 is a schematic view of a supporting member and an electromagnetic heating device of an electric pressure cooker according to another specific embodiment of the present disclosure.
Fig. 4 is a schematic view of a supporting member of an electric pressure cooker according to another specific embodiment of the present disclosure.
Fig. 5 is a schematic view of a supporting member of an electric pressure cooker according to another specific embodiment of the present disclosure.
Fig. 6 is a schematic view of a supporting pillar of a supporting member of an electric pressure cooker according to another specific embodiment of the present disclosure.
Fig. 7 is a schematic view of an outer pot of an electric pressure cooker according to embodiments of the present disclosure.
Fig. 8 is a schematic view of an outer pot of an electric pressure cooker according to embodiments of the present disclosure.
Fig. 9 is a sectional view of an outer pot of an electric pressure cooker according to embodiments of the present disclosure.
Fig. 10 is a partial schematic view of an electric pressure cooker according to embodiments of the present disclosure.
Fig. 11 is a sectional view of an electric pressure cooker according to embodiments of the present disclosure.
Fig. 12 is a schematic view of an electric pressure cooker according to embodiments of the present disclosure.
Fig. 13 is a partial schematic view of an electric pressure cooker according to embodiments of the present disclosure.
Fig. 14 is a partial schematic view of an electric pressure cooker according to embodiments of the present disclosure.
Fig. 15 is a schematic view of an outer pot of an electric pressure cooker according to embodiments of the present disclosure.
Fig. 16 is an exploded view of an electric pressure cooker according to embodiments of the present disclosure.
Fig. 17 is a partial schematic view of an electric pressure cooker according to embodiments of the present disclosure.
Fig. 18 is an exploded view of an electric pressure cooker according to embodiments of the present disclosure.
Fig. 19 is a partial schematic view of an electric pressure cooker according to embodiments of the present disclosure.
Fig. 20 is a schematic view of a magnetic-stripe fixing frame and a magnetic stripe of an electric pressure cooker according to embodiments of the present disclosure.
Fig. 21 is a schematic view of a magnetic-stripe fixing frame and a magnetic stripe of an electric pressure cooker according to embodiments of the present disclosure.

### Reference numerals:

Electric pressure cooker 1, cooker cover 10, cooker body 20, outer pot 100, support rib 110, outer-pot supporting plane 111, mounting hole 112, heat dissipation opening 120, upper turn-up 121, ventilation notch 130, circumferential-wall reinforcing rib 141, bottom-wall reinforcing rib 142, supporting member 200, supporting pillar 210, connecting ring 220, annular supporting boss 230, inner pot 300, electromagnetic heating device 400, electromagnetic heating plate 410, coil plate 411, inner positioning groove 4111, outer positioning groove 4112, the coil, magnetic-stripe fixing frame 413, magnetic-stripe positioning sleeve 4131, inner connecting rib 4132, outer connecting rib 4133, magnetic stripe 414, inner positioning protrusion 4141, outer positioning protrusion 4142, relief groove 415, holder 420, temperature-controller mounting hole 422, decoration cover 500, through hole 510, housing 600, base 610, air inlet 611, air outlet 612, supporting foot 620, wind deflector 630, fan 700, power supply board 800, cooling fin 810.

### DETAILED DESCRIPTION

Embodiments of the present disclosure will be elaborated in below and examples of the embodiments are illustrated in the drawings. The same or similar elements and the elements having same or similar functions are denoted by like reference numerals throughout the descriptions. The embodiments described herein with reference to drawings are explanatory and used to generally understand the present disclosure. The embodiments shall not be construed to limit the present disclosure.

An electric pressure cooker 1 according to embodiments of the present disclosure will be described in detail with reference to the drawings.

As illustrated in the drawings, the electric pressure cooker 1 according to embodiments of the present disclosure includes an outer pot 100, a supporting member 200, an inner pot 300 and an electromagnetic heating device 400.

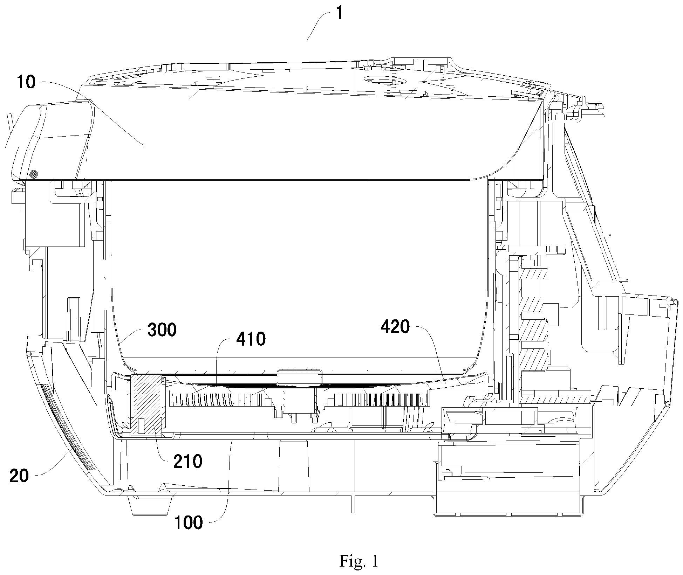

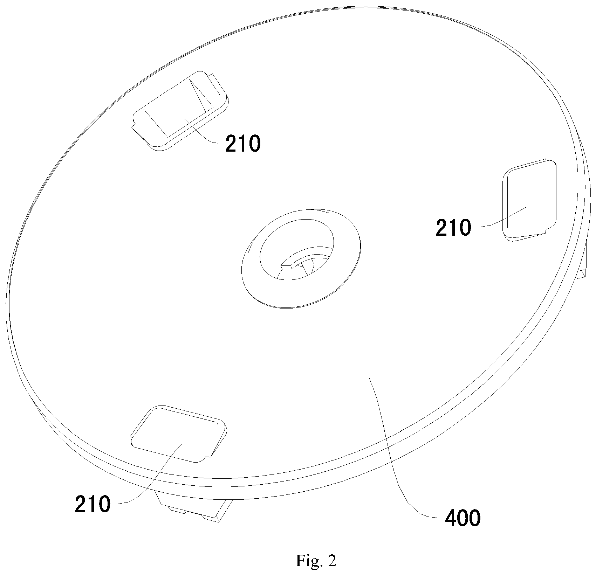

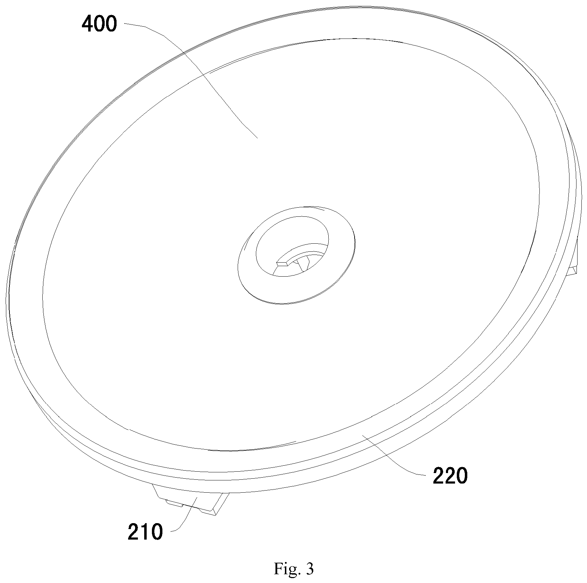

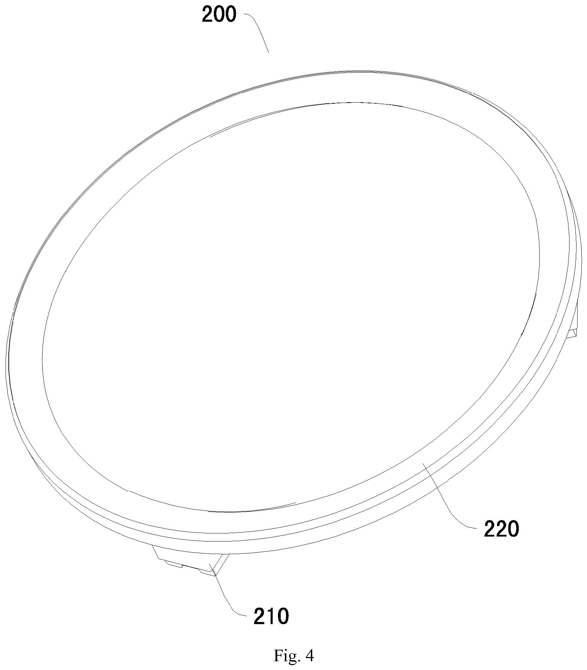

A lower end of the outer pot 100 is provided with a support rib 110 (an up and down direction is shown by arrow A in Figs. 1-4). The supporting member 200 is disposed in the outer pot 100 and supported on the support rib 110. The inner pot 300 is disposed in the outer pot 100 and supported on the supporting member 200. Under support of the supporting member 200, an outer bottom surface of the inner pot 300 is spaced apart from an inner bottom surface of the outer pot 100. The electromagnetic heating device 400 is used for heating the inner pot 300, and the electromagnetic heating device 400 is disposed between the outer bottom surface of the inner pot 300 and the inner bottom surface of the outer pot 100.

For the electric pressure cooker 1 according to embodiments of the present disclosure, by arranging the electromagnetic heating device 400, the inner pot 300 can be electromagnetically heated by the electromagnetic heating device 400. Compared with the method of using an electric heating plate to heat in the related art, the electromagnetic heating can reduce a thermal inertia, make it convenient to control the temperature, and improve a control precision over the temperature and pressure, thereby improving a cooking effect of the electric pressure cooker 1.

In addition, by arranging the support rib 110 at the lower end of the outer pot 100, the supporting member 200 can be supported on the support rib 110, such that the supporting member 200 can be conveniently supported on the outer pot 10, so as to ensure an supporting effect of the supporting member 200 on the inner pot 300, and a bottom wall of the outer pot 100 can be conveniently processed, for example the bottom wall of the outer pot 100 is opened, so as to facilitate heat dissipation.

Moreover, by arranging the supporting member 200, the supporting member 200 can be used to support the inner pot 300. When the electric pressure cooker 1 operates, a pressure in the inner pot 300 is increased to produce a downward thrust. Under the support of the supporting member 200, a force acted on the inner pot 300 is transmitted to the outer pot 100 through the supporting member 200. Since the supporting member 200 is supported between the inner pot 300 and the outer pot 100, the outer bottom surface of the inner pot 300 and the inner bottom surface of the outer pot 100 can be kept apart from each other, when the electric pressure cooker 1 operates, so as to prevent the inner pot 300 and the outer pot 100 from squeezing the electromagnetic heating device 400, thereby preventing the electromagnetic heating device 400 from being damaged and improving the reliability of the electromagnetic heating device 400.

Furthermore, by allowing a projection of an electromagnetic heating plate 410 of the electromagnetic heating device 400 in a horizontal direction to be staggered with a projection of the supporting member 200 in the horizontal direction, the supporting member 200 can escape the electromagnetic heating plate 410, such that the supporting member 200 is prevented from hindering the arrangement of the electromagnetic heating plate 410, and the electromagnetic heating plate 410 and the bottom wall of the inner pot 300 will not be blocked by the supporting member 200 therebetween. In this way, the electromagnetic heating plate 410 can be arranged as close as possible to the bottom wall of the inner pot 300, so as to improve a heating effect of the electromagnetic heating plate 410 on the inner pot 300 and improve the heating efficiency of the electromagnetic heating device 400. Moreover, a distance between the inner bottom surface of the outer pot 100 and the outer bottom surface of the inner pot 300 can be conveniently controlled, leaving more space for the arrangement of the electromagnetic heating device 400, furthermore preventing the electromagnetic heating device 400 from being damaged under stress.

Therefore, the electric pressure cooker 1 according to embodiments of the present disclosure has advantages of a low thermal inertia, a good controllability, a high production efficiency, a good heating effect and a high reliability.

The electric pressure cooker 1 according to embodiments of the present disclosure will be described in detail with reference to the drawings.

In some specific embodiments of the present disclosure, as illustrated in the drawings, the electric pressure cooker 1 according to embodiments of the present disclosure includes the outer pot 100, the supporting member 200, the inner pot 300 and the electromagnetic heating device 400.

In a specific embodiment of the present disclosure, a supporting pillar 210 is a rigid supporting member. The supporting member 200 is disposed in the outer pot 100. The inner pot 300 is disposed in the outer pot 100 and supported on the supporting member 200. Under support of the supporting member 200, the outer bottom surface of the inner pot 300 is spaced apart from the inner bottom surface of the outer pot 100. The electromagnetic heating device 400 is used for heating the inner pot 300, and the electromagnetic heating device 400 is disposed between the outer bottom surface of the inner pot 300 and the inner bottom surface of the outer pot 100. The electromagnetic heating device 400 includes the electromagnetic heating plate 410, and the projection of the electromagnetic heating plate 410 in the horizontal direction is staggered with the projection of the supporting member 200 in the horizontal direction. It should be understood that, the electromagnetic heating plate 410 refers to a structure of the electromagnetic heating device 400 for achieving the electromagnetic heating function. The expression "the electromagnetic heating device 400 includes the electromagnetic heating plate 410" may indicate that the electromagnetic heating device 400 includes the electromagnetic heating plate 410 and other structures, and may also indicate that the electromagnetic heating device 400 is the electromagnetic heating plate 410. The expression "the projection of the electromagnetic heating plate 410 in the horizontal direction is staggered with the projection of the supporting member 200 in the horizontal direction" indicates that the projection of the electromagnetic heating plate 410 in the horizontal direction and the projection of the supporting member 200 in the horizontal direction are not overlapped.

Moreover, by arranging the rigid supporting member 200 to support the inner pot 300, compared with the method of using an elastic member to support the inner pot 300, it can be avoided that an elastic force of the elastic member is reduced or even fails due to a long time service or an excessive pressure, and since the inner pot 300 and the outer pot 100 will not produce a relative movement, a space for compressing the elastic member does not need to be reserved between the outer pot 100 and the inner pot 300, such that, on one hand, it is convenient to control a dimension of the electric pressure cooker 1, and on the other hand, the electromagnetic heating device 400 can be further avoided from being damaged under stress. Due to a structural limit of the elastic member itself, other rigid structures are needed to connect and position the elastic member, such that the arrangement of the supporting member 200 can omit the structures for connecting and positioning the elastic member, thus reducing the amount of parts of the electric pressure cooker 1, simplifying the structure of the electric pressure cooker 1, and improving the production efficiency of the electric pressure cooker 1.

In some specific embodiments of the present disclosure, as illustrated in the drawings, the electric pressure cooker 1 according to embodiments of the present disclosure includes the outer pot 100, the supporting member 200, the inner pot 300 and the electromagnetic heating device 400.

The lower end of the outer pot 100 is provided with the support rib 110. The bottom wall of the outer pot 100 is provided with a heat dissipation opening 120, and the support rib 110 is formed to an inner circumferential wall of the heat dissipation opening 120. Specifically, the heat dissipation opening 120 may be substantially triangle-shaped. Thus, an airflow can pass through the heat dissipation opening 120, so as to cool the outer pot 100 conveniently, and also the heating of the electromagnetic heating device 400 on the bottom of the outer pot 100 can be reduced, thereby further facilitating the cooling and the heat dissipation of the outer pot 100. It could be understood by those skilled in the art that, the support rib 110 can be constituted by a portion of the bottom wall of the outer pot 100 apart from the heat dissipation opening 120.

The electromagnetic heating plate 410 is spaced apart from at least one of the inner bottom surface of the outer pot 100 and the outer bottom surface of the inner pot 300. Thus, it is convenient for the electromagnetic heating device 400 to be arranged, and also the electromagnetic heating device 400 can be further prevented from being damaged due to squeeze of the outer pot 100 and the inner pot 300.

Advantageously, as illustrated in the drawings, the supporting member 200 includes a plurality of supporting pillars 210 arranged along a circumferential direction of the inner pot 300 and spaced apart from each other. Specifically, the plurality of supporting pillars 210 are arranged at equal intervals while surrounding the electromagnetic heating plate 410. Thus, the plurality of supporting pillars 210 can be used to support the inner pot 300, so that it is convenient to support the inner pot 300, and also to transmit the force acted on the inner pot 300 to the outer pot 100 by means of the supporting member 200.

Specifically, as illustrated in the drawings, three supporting pillars 210 may be provided, thus facilitating the support for the inner pot 300 and ensuring the stability of the inner pot 300.

Advantageously, as illustrated in the drawings, an outer circumferential edge of the outer bottom surface of the inner pot 300 is supported on the plurality of supporting pillars 210. Thus, it is further convenient to support the inner pot 300, so as to improve the stability of the inner pot 300, and more space can be reserved for the electromagnetic heating plate 410 to be mounted, such that, on one hand, it is convenient to mount the electromagnetic heating plate 410, and on the other hand, it is beneficial to the dimension improvement of the electromagnetic heating plate 410, so as to ensure that the inner pot 300 can be heated evenly.

In one specific embodiment of the present disclosure, as illustrated in the drawings, the electromagnetic heating device 400 further includes a holder 420, the electromagnetic heating plate 410 is provided to the holder 420, the holder 420 is provided with a plurality of mounting holes, and the plurality of supporting pillars 210 are fitted in the plurality of mounting holes correspondingly. It should be understood that, the holder 420 may be spaced apart from the inner pot 300 or may be fitted closely with the inner pot 300, but the holder 420 is used for positioning the electromagnetic heating plate 410, rather than supporting the inner pot 300. Specifically, the electromagnetic heating plate 410 is disposed to a lower surface of the holder 420, which thus facilitates the positioning of the supporting pillar 210 and the electromagnetic heating device 400, so as to facilitate the mounting of the supporting pillar 210 and the electromagnetic heating device 400, and also avoids the supporting pillar 210 from producing a force component when being pressured, so as to improve the stability of the supporting member 200.

In another specific embodiment of the present disclosure, as illustrated in the drawings, the supporting member 200 further includes a connecting ring 220 extending in the circumferential direction of the inner pot 300 and respectively connected with the plurality of supporting pillars 210, and the electromagnetic heating device 400 is fitted in the connecting ring 220. Thus, it is convenient for the positioning of the plurality of supporting pillars 210 and the electromagnetic heating device 400, so as to facilitate the mounting of the supporting member 200, and also the supporting pillar 210 can be avoided from producing a force component when being pressured, so as to improve the stability of the supporting member 200.

Specifically, the supporting pillar 210 and the connecting ring 220 may be integrally molded.

Optionally, as illustrated in the drawings, the plurality of supporting pillars 210 are connected to a lower surface of the connecting ring 220, and the inner pot 300 is supported on the connecting ring 220. Thus, it is further beneficial to the support for the inner pot 300, so as to enable the inner pot 300 to be forced more evenly, thereby further improving the stability of the inner pot 300.

In another specific embodiment of the present disclosure, as illustrated in the drawings, the supporting member 200 is an annular supporting boss 230 extending in the circumferential direction of the inner pot 300, and the electromagnetic heating device 400 is fitted in the annular supporting boss 230. Thus, the annular supporting member 200 can be used to support the inner pot 300, so as to enable the inner pot 300 and the outer pot 100 to be forced evenly and improve the stability of the inner pot 300. Moreover, the outer pot 100 or the inner pot 300 can be avoided from producing a plastic deformation and even being damaged due to an excessive partial pressure, thereby further improving the stability of the electric pressure cooker 1.

Fig. 1 illustrates an electric pressure cooker 1 according to a specific embodiment of the present disclosure. As illustrated in Fig. 1, an inner bottom wall of the outer pot 100 is provided with a supporting-member positioning groove, and the supporting member 200 is fitted in the supporting-member positioning groove. Thus, it is further convenient to position the supporting member 200, thereby facilitating the mounting of the supporting member 200.

Optionally, as illustrated in Fig. 1, the supporting member 200 is mounted to the outer pot 100 by a threaded fastener. Thus, the mounting strength of the supporting member 200 can be improved, and also the stability of the supporting member 200 can be enhanced.

Specifically, as illustrated in Fig. 1, the electromagnetic heating plate 410 is an electromagnetic coil plate. Specifically, the lower surface of the holder 420 can be provided with a plurality of wire-winding slots, and the electromagnetic coil plate is coiled in the wire-winding slots, thereby making it convenient to achieve the electromagnetic heating of the inner pot 300.

Specifically, as illustrated in Fig. 1, the electric pressure cooker 1 can further include a cooker body 20 and a cooker cover 10. The inner pot 300, the outer pot 100, the supporting member 200 and the electromagnetic heating device 400 are disposed in the cooker body 20.

In some specific embodiments of the present disclosure, the bottom wall of the outer pot 100 is provided with the heat dissipation opening 120, and the support rib 110 is formed to the inner circumferential wall of the heat dissipation opening 120. Specifically, the heat dissipation opening 120 may be substantially triangle-shaped. Thus, the airflow can pass through the heat dissipation opening 120, so as to cool the outer pot 100, and also the heating of the electromagnetic heating device 400 on the bottom of the outer pot 100 can be reduced, thereby further facilitating the cooling and the heat dissipation of the outer pot 100.

Optionally, a sectional area of the heat dissipation opening 120 is larger than 1500 square millimeter, thereby ensuring a heat dissipation effect of the outer pot 100.

It could be understood by those skilled in the art that, the support rib 110 can be constituted by the portion of the bottom wall of the outer pot 100 apart from the heat dissipation opening 120.

Advantageously, as illustrated in the drawings, a ventilation notch 130 is provided at a junction between a circumferential wall and the bottom wall of the outer pot 100. Thus, the airflow can pass through the ventilation notch 130, such that it is convenient for heat to be exhausted out of the ventilation notch 130, thereby further facilitating the heat dissipation of the outer pot 100.

More advantageously, as illustrated in the drawings, a depth h of the ventilation notch 130 in a vertical direction is less than 90 millimeters, and a width a of the ventilation notch 130 in a circumferential direction of the outer pot 100 is less than 200 millimeters, thus ensuring a capacity and a structural strength of the outer pot 100 while ensuring the heat dissipation effect of the ventilation notch 130.

Further, as illustrated in the drawings, a lower end of the supporting pillar 210 has a lower supporting plane, the support rib 110 is provided with an outer-pot supporting plane 111, and the lower supporting plane is supported on the outer-pot supporting plane 111, such that the stability of the supporting pillar 210 supported on the support rib 110 can be improved, thus improving the stability of the inner pot 300 supported on the supporting pillar 210, and thereby further improving the supporting effect with regard to the inner pot 300.

In another specific embodiment of the present disclosure, an elastic member is provided below the supporting pillar 210, and the supporting pillar 210 is supported on the elastic member 220. When a pressure exerted on the elastic member 220 reaches a pre-determined value, the elastic member 220 is deformed to shorten the distance between the inner pot 300 and the outer pot 100, thereby decompressing the electric pressure cooker 1.

Specifically, as illustrated in the drawings, the circumferential wall of the outer pot 100 is provided with a circumferential-wall reinforcing rib 141, and the bottom wall of the outer pot 100 is provided with a bottom-wall reinforcing rib 142. Thus, the structural strength of the outer pot 100 can be improved, so as to prevent the outer pot 100 from being deformed. Moreover, the structural strength and the stability of the support rib 110 can be improved, so as to prevent the support rib 110 from being deformed, which otherwise will result in a displacement of the supporting pillar 210, thereby further improving the stability of the supporting pillar 210. Furthermore, the bottom-wall reinforcing rib 142 can be used to position the supporting pillar 210.

More specifically, a height of the bottom-wall reinforcing rib 142 away from the bottom wall of the outer pot 100 is less than 30 millimeters, such that a reinforcing effect of the bottom-wall reinforcing rib 142 on the outer pot 100 can be ensured.

In some specific embodiments of the present disclosure, an inner circumferential edge of the heat dissipation opening 120 is provided with an upper turn-up 121. Thus, the upper turn-up 121 can be used to further improve the structural strength of the outer pot 100, so as to prevent the outer pot 100 from being deformed, and the upper turn-up 121 also can be used to block a water flow, so as to prevent the water from flowing down through the heat dissipation opening 120, thereby ensuring the reliability of the electric pressure cooker 1.

Optionally, a height of the upper turn-up 121 in the vertical direction is 1-15 millimeters, thereby facilitating the manufacturing of the upper turn-up 121 while ensuring the blocking effect of the upper turn-up 121 on the water flow.

Specifically, as illustrated in the drawings, the support rib 110 is provided with a mounting hole 112. Specifically, the supporting pillar 210 may be provided with a threaded hole, and the supporting pillar 210 is mounted to the support rib 110 through a screw or a bolt fitted in the mounting hole 112 and the threaded hole. Thus, it is convenient for fixation of the supporting pillar 210, so as to facilitate improvements of the stability and the reliability of the supporting pillar 210.

Advantageously, as illustrated in the drawings, a plurality of support ribs 110 are provided and spaced apart from each other in the circumferential direction of the outer pot 100, a plurality of supporting pillars 210 are provided and supported on the plurality of support ribs 110 correspondingly. Thus, the plurality of supporting pillars 210 can be used to support the inner pot 300, so as to enable the inner pot 300 and the outer pot 100 to be forced more evenly, and also to further improve the stability of the inner pot 300.

Specifically, as illustrated in the drawings, three supporting pillars 210 are provided, thus facilitating the support for the inner pot 300, and ensuring the stability of the inner pot 300.

More advantageously, the outer pot 100 is formed by stamping a cold-rolled sheet, and a thickness of the cold-rolled sheet is 0.4-2 millimeters, so as to ensure the structural strength and the rigidity of the outer pot 100.

Fig. 1 illustrates the electric pressure cooker 1 according to a specific embodiment of the present disclosure. As illustrated in the drawings, the electromagnetic heating device 400 includes the electromagnetic heating plate 410, and the projection of the electromagnetic heating plate 410 in the horizontal direction is staggered with a projection of the supporting pillar 210 in the horizontal direction. It should be understood that, the electromagnetic heating plate 410 refers to a structure of the electromagnetic heating device 400 for achieving the electromagnetic heating function. The expression "the electromagnetic heating device 400 includes the electromagnetic heating plate 410" may indicate that the electromagnetic heating device 400 includes the electromagnetic heating plate 410 and other structures, and may also indicate that the electromagnetic heating device 400 is the electromagnetic heating plate 410. The expression "the projection of the electromagnetic heating plate 410 in the horizontal direction is staggered with a projection of the supporting pillar 210 in the horizontal direction" indicates that the projection of the electromagnetic heating plate 410 in the horizontal direction and the projection of the supporting pillar 210 in the horizontal direction are not overlapped. By allowing the projection of the electromagnetic heating plate 410 of the electromagnetic heating device 400 in the horizontal direction to be staggered with the projection of the supporting pillar 210 in the horizontal direction, the supporting pillar 210 can escape the electromagnetic heating plate 410, such that the supporting pillar 210 is prevented from hindering the arrangement of the electromagnetic heating plate 410, and the electromagnetic heating plate 410 and the bottom wall of the inner pot 300 will not be blocked by the supporting pillar 210 therebetween. In this way, the electromagnetic heating plate 410 can be arranged as close as possible to the bottom wall of the inner pot 300, so as to improve the heating effect of the electromagnetic heating plate 410 on the inner pot 300 and improve the heating efficiency of the electromagnetic heating device 400. Moreover, the distance between the inner bottom surface of the outer pot 100 and the outer bottom surface of the inner pot 300 can be conveniently controlled, so as to leave more space for the arrangement of the electromagnetic heating device 400, thus further preventing the electromagnetic heating device 400 from being damaged under stress.

Specifically, as illustrated in the drawings, the electric pressure cooker 1 may further include the cooker body 20 and the cooker cover 10. The inner pot 300, the outer pot 100, the supporting pillar 210 and the electromagnetic heating device 400 are disposed in the cooker body 20.

In some specific embodiments of the present disclosure, an outer circumferential edge of the outer pot 100 may be provided with a plurality of outer-pot teeth, and the cooker cover 10 may be provided with a plurality of inner-pot teeth.

In some specific embodiments of the present disclosure, as illustrated in the drawings, the electric pressure cooker 1 according to embodiments of the present disclosure includes the outer pot 100, the rigid supporting pillar 210, the inner pot 300, the electromagnetic heating device 400, a housing 600 and a fan 700.

The housing 600 is provided with an air inlet 611 and an air outlet 612. The outer pot 100 is disposed in the housing 600. The rigid supporting pillar 210 is disposed in the outer pot 100. The inner pot 300 is disposed in the outer pot 100 and supported on the rigid supporting pillar 210. Under the support of the rigid supporting pillar 210, the outer bottom surface of the inner pot 300 is spaced apart from the inner bottom surface of the outer pot 100. The electromagnetic heating device 400 is used to heat the inner pot 300, and the electromagnetic heating device 400 is disposed between the outer bottom surface of the inner pot 300 and the inner bottom surface of the outer pot 100. The fan 700 is disposed between an inner surface of the housing 600 and an outer surface of the outer pot 100.

In addition, by providing the air inlet 611 and the air outlet 612 in the housing 600, and by arranging the fan 700 in the housing 600, the fan 700 can be used to convey air, such that the air enters the housing 600 through the air inlet 611 and takes the heat in the housing 600 out of the air outlet 612, so as to cool structures inside the housing 600, and ensure a reliable operation of the electric pressure cooker 1.

Further, as illustrated in the drawings, a distance between the fan 700 and the bottom wall of the outer pot 100 is less than or equal to 150 millimeters, such that the fan 700 can be as close as possible to the outer pot 100, thus ensuring an air speed at the electromagnetic heating device 400, and ensuring a cooling effect on the electromagnetic heating device 400 and the outer pot 100.

Specifically, as illustrated in the drawings, the ventilation notch 130 is provided at the junction between the circumferential wall and the bottom wall of the outer pot 100, and the ventilation notch 130 is disposed adjacent to the fan 700. Thus, the airflow can pass through the ventilation notch 130 into the outer pot 100, thereby further facilitating the heat dissipation of the electromagnetic heating device 400 and the outer pot 100.

Specifically, as illustrated in the drawings, the ventilation notch 130 is communicated with the heat dissipation opening 120, such that the airflow can enter the heat dissipation opening 120 through the ventilation notch 130, thereby further facilitating the heat dissipation of the electromagnetic heating device 400 and the outer pot 100.

More specifically, the depth h of the ventilation notch 130 in the vertical direction is less than 90 millimeters, and the width a of the ventilation notch 130 in the circumferential direction of the outer pot 100 is less than 200 millimeters, thus ensuring the capacity and the structural strength of the outer pot 100 while ensuring the heat dissipation effect of the ventilation notch 130.

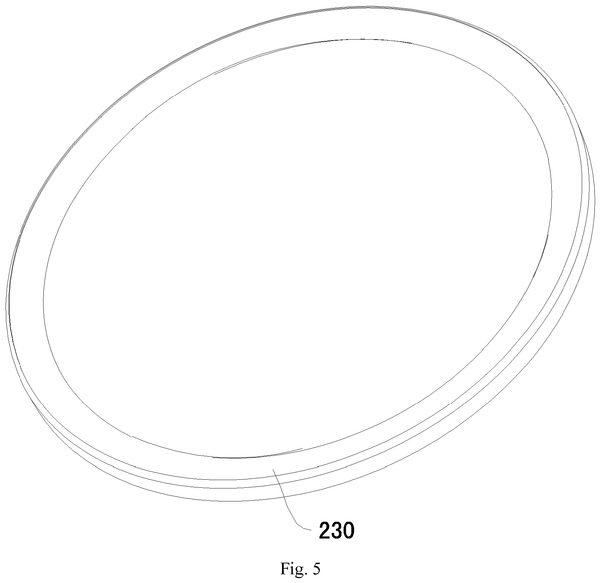

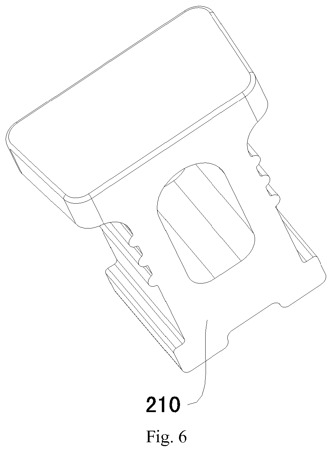

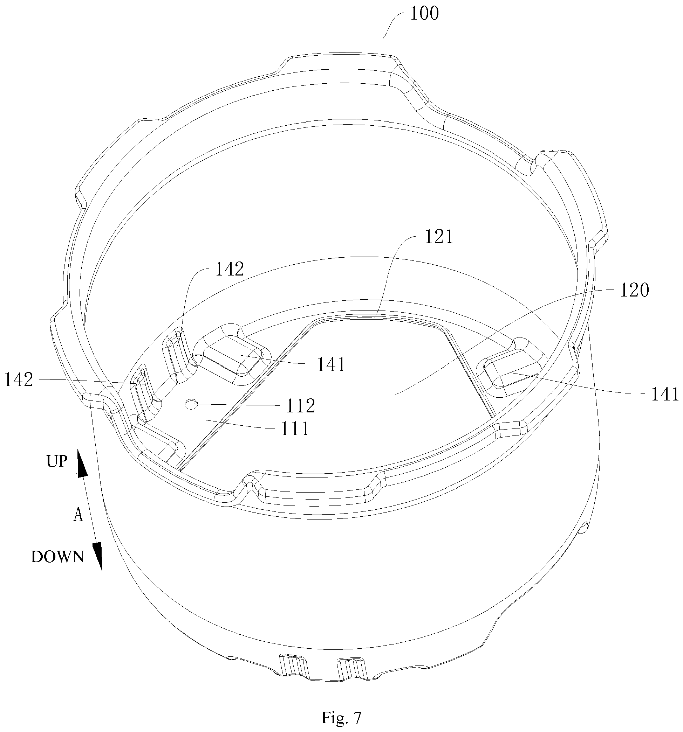

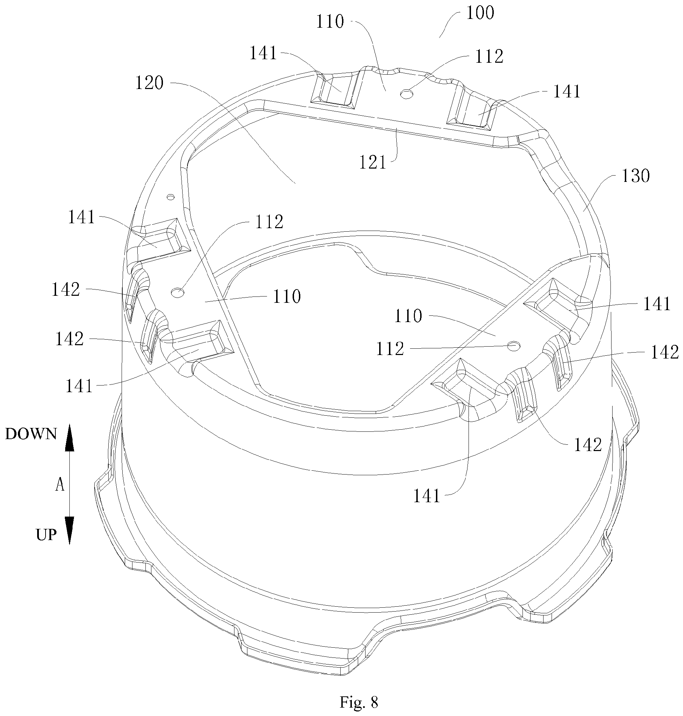

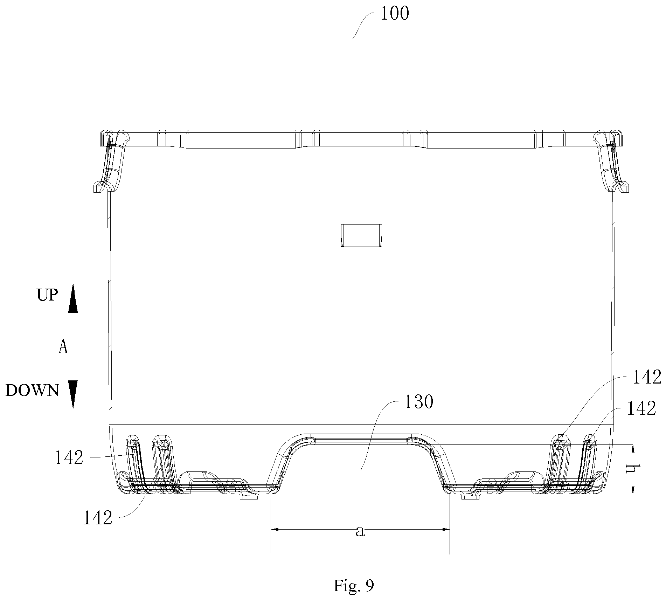

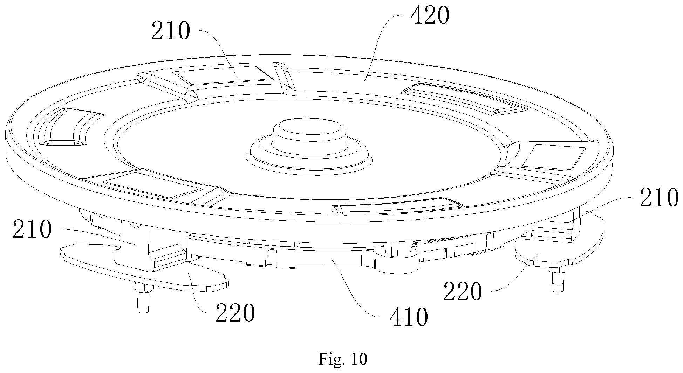

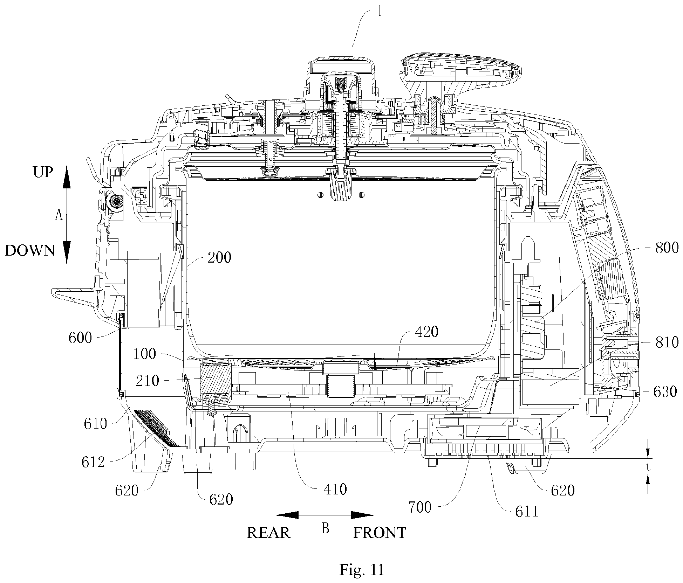

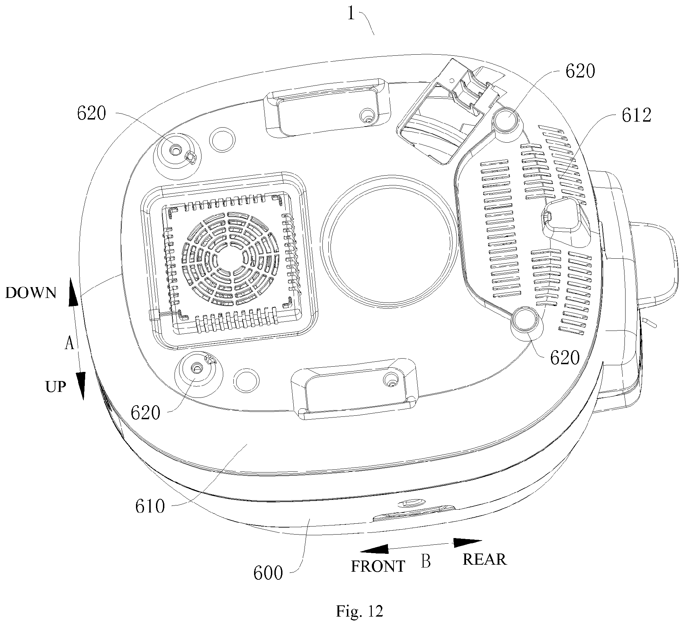

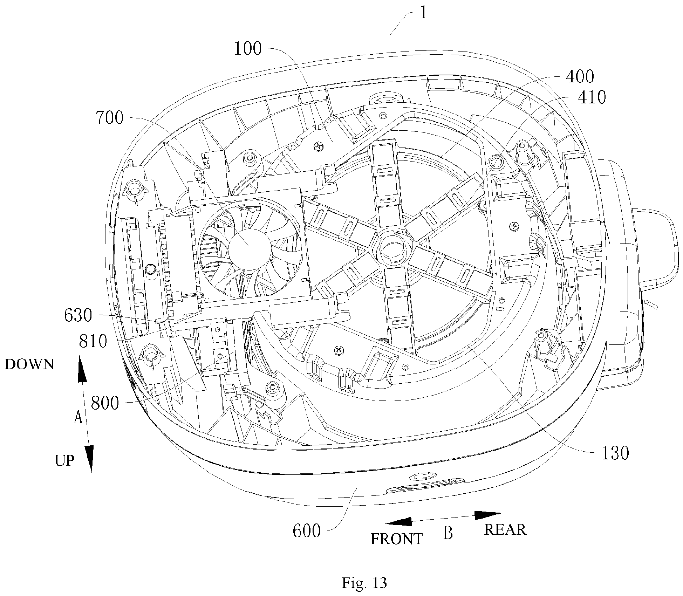

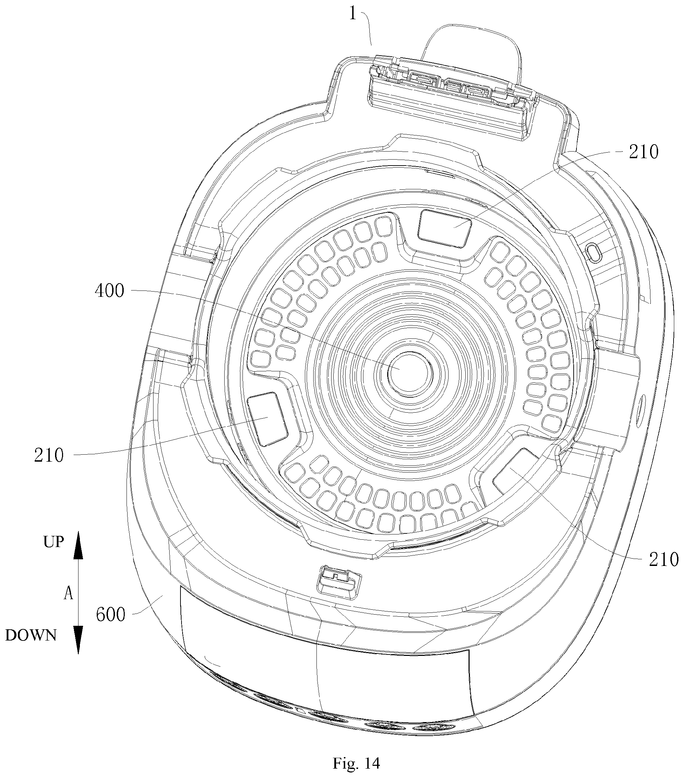

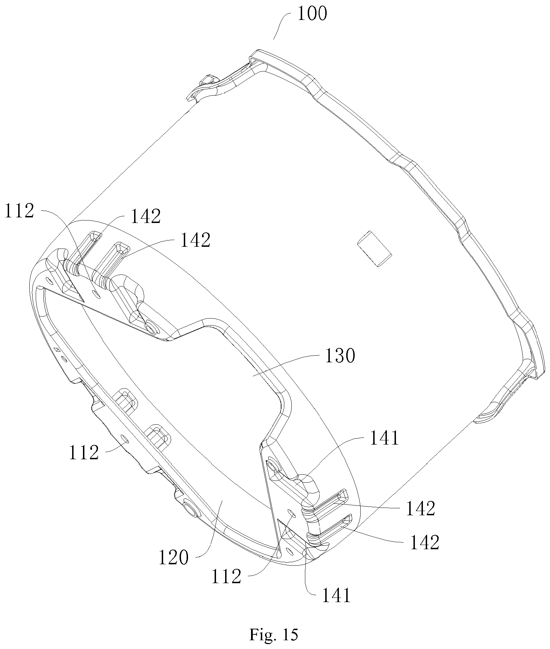

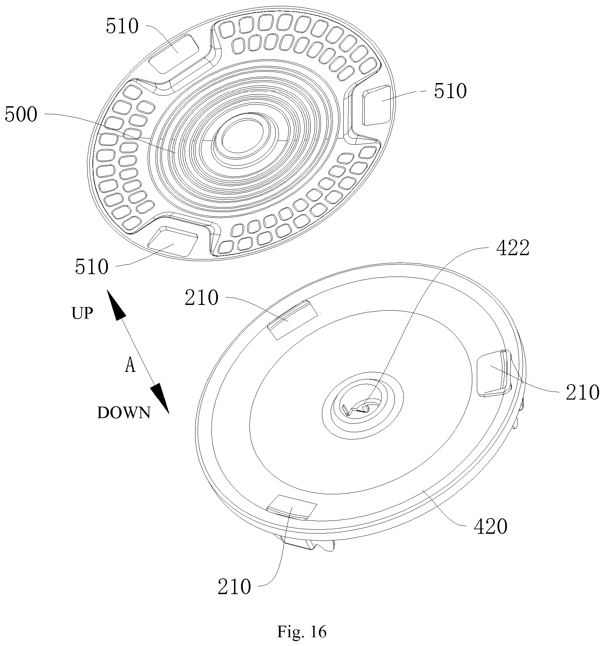

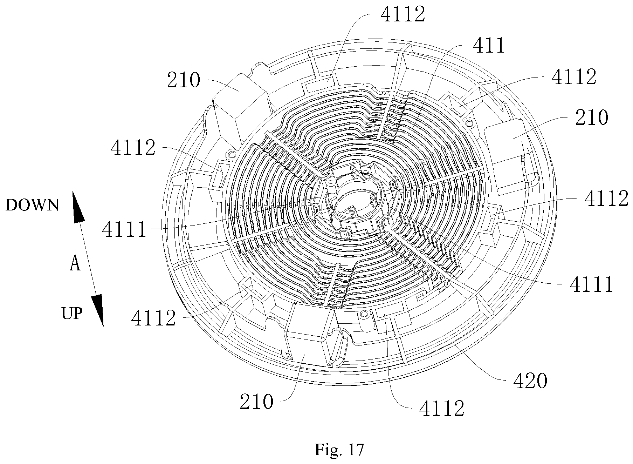

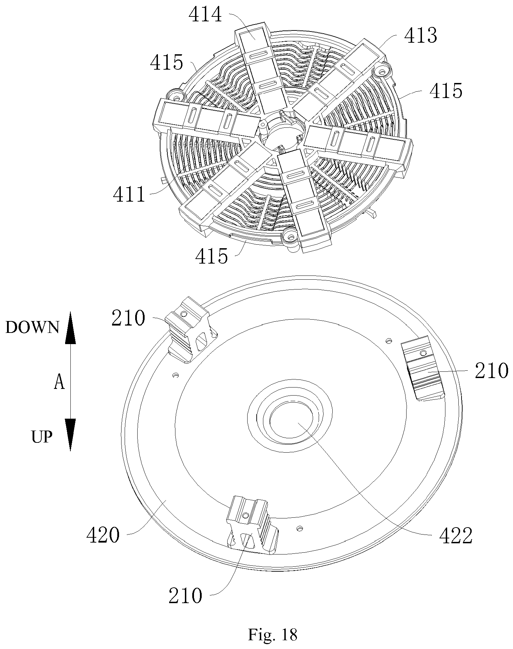

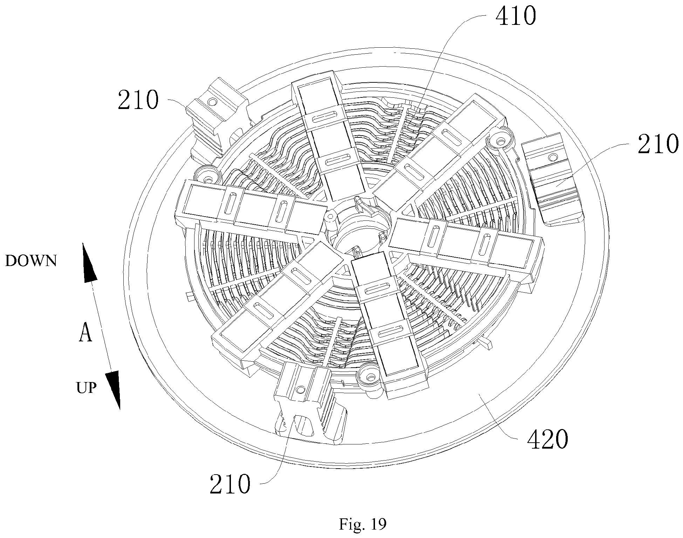

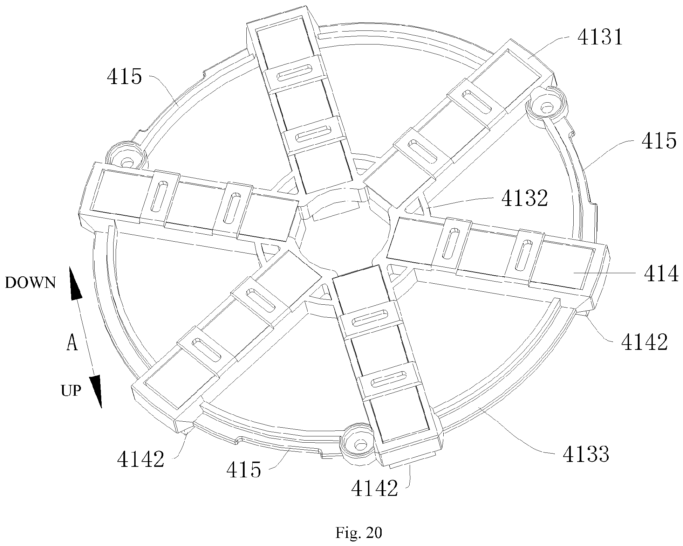

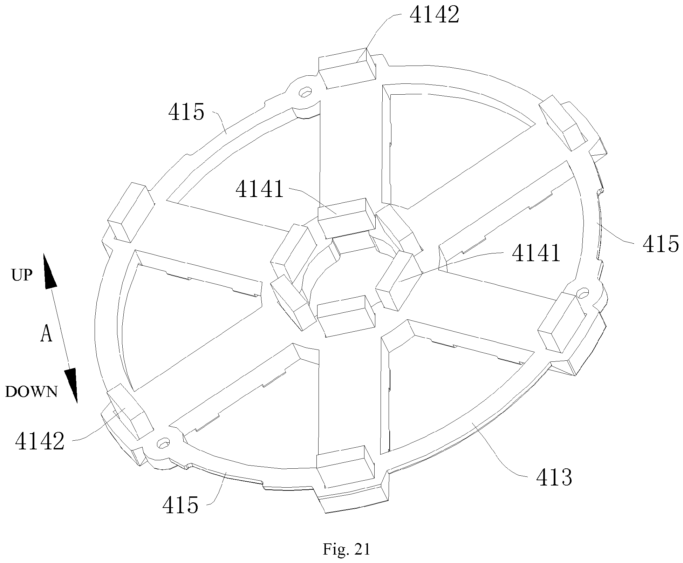

Figs. 1-21 illustrate the electric pressure cooker 1 according to a specific embodiment of the present disclosure. The electric pressure cooker 1 further includes a power supply board 800, the power supply board 800 is located between the outer circumferential wall of the outer pot 100 and the inner circumferential wall of the housing 600, and is adjacent to the fan 700, such that the electromagnetic heating device 400 can be supplied with power through the power supply board 800, so as to facilitate the control over the electric pressure cooker 1 and the arrangements of the respective components, and also, the fan 700 can be used for the cooling and the heat dissipation of the power supply board 800, so as to ensure the reliability of the power supply board 800 during its operation.

Advantageously, as illustrated in the drawings, an end of the power supply board 800 adjacent to the fan 700 is provided with a cooling fin 810, such that the power supply board 800 can be further cooled through the cooling fin 810, thus increasing a heat dissipation area of the power supply board 800, and improving cooling and heat dissipation effects of the fan 700 on the power supply board 800.

More advantageously, as illustrated in the drawings, the power supply board 800 is oriented in the vertical direction, and the cooling fin 810 extends from the power supply board 800 to the housing 600, such that the extending direction of the cooling fin 810 is perpendicular to a blowing direction of the fan 700, thereby improving the heat dissipation effect of the fan 700 on the power supply board 800.

Specifically, as illustrated in the drawings, a plurality of cooling fins 810 may be provided and spaced apart from each other in the horizontal direction, such that the plurality of cooling fins 810 can be used for heat dissipation, so as to enable the airflow to pass through a gap between two adjacent cooling fins 810, thus further improving the heat dissipation area and ensuring the heat dissipation effect.

Specifically, as illustrated in the drawings, the housing 600 is provided with a wind deflector 630, the wind deflector 630 is oriented in the vertical direction and spaced apart from the cooling fin 810, such that the wind deflector 630 can be used to guide the airflow blown out by the fan 700, thus ensuring the heat dissipation effect of the fan 700.

More specifically, as illustrated in the drawings, a distance between the wind deflector 630 and the cooling fin 810 is less than or equal to 30 millimeters, such that a resistance acted on the airflow blowing through the gap between the wind deflector 630 and the cooling fin 810 can be adjusted, so as to ensure the heat dissipation effect of the fan 700.

Figs. 1-21 illustrate the electric pressure cooker 1 according to a specific embodiment of the present disclosure. As illustrated in the drawings, the fan 700 is located above the air inlet 611, such that a distance between the air inlet 611 and the fan 700 can be shortened, and the flow speed of the air in the housing 600 is ensured, thereby ensuring the cooling effect on the electromagnetic heating device 400 and the outer pot 100.

Specifically, as illustrated in the drawings, the housing 600 includes a base 610, the air inlet 611 and the air outlet 612 are both provided to the base 610 and respectively adjacent to two ends of the base 610, such that an appearance of the electric pressure cooker 1 is neat and aesthetic, and most part of the airflow can pass through a radial direction of the electromagnetic heating device 400, thus ensuring the cooling effect on the electromagnetic heating device 400.

Specifically, the air inlet 611 is adjacent to a front end of the base 610 and the air outlet 612 is adjacent to a rear end of the base 610 (a front and rear direction is shown by arrow B in the drawings).

Advantageously, as illustrated in the drawings, the housing 600 is provided with a supporting foot 620 at a bottom thereof, and a length of the supporting foot 620 away from a lower surface of the housing 600 is 1-75 millimeters. In this case, when the electric pressure cooker 1 is placed on a plane, there is a sufficient space between the lower surface of the housing 600 and the plane, such that the airflow can flow therethrough smoothly, thus ensuring an air intake volume of the air inlet 611.

A working process of the electric pressure cooker 1 according to embodiments of the present disclosure will be described with reference to the drawings in the following.

When the electric pressure cooker 1 starts working, the fan 700 starts operating, and the outside air enters the housing 600 through the air inlet 611, and produces an airflow in the housing 600 under the action of the fan 700. Under the action of the wind deflector 630, most part of the airflow enters the space between the bottom wall of the outer pot 100 and the bottom wall of the inner pot 300 through the ventilation notch 130 and the heat dissipation opening 120, so as to take away the heat of the electromagnetic heating device 400 and discharge the heat out of the air outlet 612, and the rest part of the airflow blows to the power supply board 800, so as to cool the cooling fin 810.

In some specific embodiments of the present disclosure, as illustrated in the drawings, the electric pressure cooker 1 according to embodiments of the present disclosure includes the outer pot 100, the supporting pillar 210, an elastic member 220, the inner pot 300, the electromagnetic heating device 400, the housing 600 and the fan 700.

The housing 600 is provided with the air inlet 611 and the air outlet 612. The outer pot 100 is disposed in the housing 600. The elastic member 220 is disposed in the outer pot 100 and supported on the bottom wall of the outer pot 100. The supporting pillar 210 is disposed in the outer pot 100 and supported on the elastic member 220. The inner pot 300 is disposed in the outer pot 100 and supported on the supporting pillar 210, and the elastic member 220 is deformed when the pressure in the inner pot 300 reaches a pre-determined value, so as to release the pressure in the inner pot 300. The electromagnetic heating device 400 is used to heat the inner pot 300, and the electromagnetic heating device 400 is disposed between the outer bottom surface of the inner pot 300 and the inner bottom surface of the outer pot 100. The fan 700 is disposed between the inner surface of the housing 600 and the outer surface of the outer pot 100.

Moreover, by arranging the elastic member 220 and supporting the supporting pillar 210 on the elastic member 220, the elastic member 220 can be deformed when the pressure in the inner pot 300 reaches the pre-determined value, so as to decompress the inner pot 300, and thus the electric pressure cooker 1 can be prevented from being damaged due to the excessively high pressure in the inner pot 300, thereby improving the reliability of the electric pressure cooker 1.

The elastic member 220 is deformed to move the inner pot 300 downwards, when the pressure in the inner pot 300 reaches the pre-determined value. To be more specific, during the operation of the electric pressure cooker 1, the pressure in the inner pot 300 is increased continuously, a force acted on the supporting pillar 210 by the inner pot 300 is increased continuously and a force acted on the elastic member 220 by the supporting pillar 210 is also increased continuously. When the pressure in the inner pot 300 exceeds a normal-pressure control range and continues increasing to reach the pre-determined value, the elastic member 220 is deformed under the force, so as to move the inner pot 300 downwards to release the pressure, such that the pressure relief of the inner pot 300 can be achieved, and the reliability of the electric pressure cooker 1 can be ensured.

More specifically, the electric pressure cooker 1 includes the cooker body and the cooker cover, and the cooker cover is rotatably disposed to the cooker body, so as to open or close the inner pot 300. A seal ring may be provided between the inner pot 300 and the cooker cover. Thus, when the inner pot 300 moves downwards, the pressure in the inner pot 300 can be reduced by increasing a volume of a space defined by the inner pot 300 and the cooker cover, or a gap may be produced between the seal ring and at least one of the cooker cover and the inner pot 300 due to the downward movement of the inner pot 300, so as to release the pressure.

Advantageously, as illustrated in the drawings, the bottom wall of the outer pot 100 is provided with the reinforcing rib, two ends of the elastic member 220 are supported on the reinforcing rib respectively and the supporting pillar 210 is supported at a center of the elastic member 220 in a length direction thereof, such that it is convenient for the elastic member 220 to be deformed so as to move the supporting pillar 210 downwards, and thus it is convenient for the inner pot 300 to move downwards when the elastic member 220 is deformed.

Specifically, as illustrated in the drawings, the reinforcing rib includes the circumferential-wall reinforcing rib 141 and the bottom-wall reinforcing rib 142. The circumferential wall of the outer pot 100 is provided with the circumferential-wall reinforcing rib 141, and the bottom wall of the outer pot 100 is provided with the bottom-wall reinforcing rib 142. Specifically, the elastic member 220 may be supported on the bottom-wall reinforcing rib 142. Thus, the structural strength of the outer pot 100 can be improved to prevent the outer pot 100 from being deformed, and the structural strength and the stability of the bottom wall of the outer pot 100 can be improved to prevent the outer pot 100 from being plastically deformed and hence resulting in a displacement of the supporting pillar 210, so as to further improve the stability of the rigid supporting pillar 210. Moreover, the bottom-wall reinforcing rib 142 may be used to position the rigid supporting pillar 210.

More advantageously, as illustrated in the drawings, the elastic member 220 has a plate shape and a width of the elastic member 220 is gradually increased from two ends of the elastic member 220 to the middle of the elastic member, such that it is convenient to adjust an effect of the force acted on the elastic member 220, so as to ensure that the elastic member 220 can be deformed promptly when the pressure in the inner pot 300 is excessively high, thereby ensuring the reliability of the electric pressure cooker 1.

Advantageously, as illustrated in the drawings, the lower end of the supporting pillar 210 is mounted to the elastic member 220 and an upper end of the supporting pillar 210 abuts against the outer bottom surface of the inner pot 300, thus facilitating the fixation of the rigid supporting pillar 210, and improving the stability and the reliability of the rigid supporting pillar 210.

Specifically, as illustrated in the drawings, the supporting pillar 210 is provided with a mounting hole, the outer pot 100 is provided with the mounting hole 112, the elastic member 220 is provided with an elastic-member through hole, and the supporting pillar 210 is mounted to the outer pot 100 through a threaded fastener fitted in the mounting hole, the mounting hole 112 and the elastic-member through hole, such that the connection of the elastic member 220, the supporting pillar 210 and the outer pot 100 can be achieved, and the stability of relative positions among the elastic member 220, the supporting pillar 210 and the outer pot 100 can be ensured.

In some specific embodiments of the present disclosure, the electromagnetic heating plate 410 includes a coil plate 411, a coil and a magnetic stripe 414. The coil plate 411 is provided with a coil slot. The coil is fitted in the coil slot. The magnetic stripe 414 is disposed to the coil plate 411. Thus, the coil slot may be used to position the coil, thus facilitating the mounting of the coil, and improving the stability of the coil.

Specifically, as illustrated in the drawings, the electromagnetic heating plate 410 further includes a magnetic-stripe fixing frame 413, the magnetic-stripe fixing frame 413 is mounted to the coil plate 411, and the magnetic stripe 414 is mounted to the magnetic-stripe fixing frame 413, such that the magnetic-stripe fixing frame 413 can be used to position the magnetic stripe 414, thereby improving the stability of the magnetic stripe 414. Moreover, the magnetic stripe 414 may be mounted to the magnetic-stripe fixing frame 413 firstly during mounting, and then the magnetic stripe 414 and the magnetic-stripe fixing frame 413 are together mounted to the coil plate 411, thereby facilitating the mounting of the magnetic stripe 414, and simplifying the assembling process of the electromagnetic heating plate 410.

In a specific embodiment of the present disclosure, the coil plate 411 and the holder 420 are integrally molded, such that the structural strength and the connection strength of the coil plate 411 and the holder 420 can be ensured, the assembling process of the electric pressure cooker 1 can be simplified, and the production efficiency of the electric pressure cooker 1 can be improved.

In another specific embodiment of the present disclosure, the coil plate 411 is connected to the holder 420 through a threaded fastener, such that the manufacturing difficulties of the holder 420 and the coil plate 411 can be reduced, thereby facilitating the production and manufacturing of the holder 420 and the coil plate 411.

Specifically, as illustrated in the drawings, the magnetic-stripe fixing frame 413 is provided with a magnetic-stripe mounting groove, the coil plate 411 is provided with a magnetic-stripe positioning groove, the magnetic stripe 414 is provided with a positioning protrusion, the magnetic stripe 414 is fitted in the magnetic-stripe mounting groove and the positioning protrusion is fitted in the magnetic-stripe positioning groove. Thus, the magnetic-stripe positioning groove, the magnetic-stripe mounting groove and the positioning protrusion may be used to position the magnetic stripe 414, thereby facilitating the mounting of the magnetic stripe 414, and improving the stability of the magnetic stripe 414 after being mounted.

More specifically, as illustrated in the drawings, the positioning protrusion includes an inner positioning protrusion 4141 and an outer positioning protrusion 4142 located at two ends of the magnetic stripe 414 respectively, the magnetic-stripe positioning groove includes an inner positioning groove 4111 disposed adjacent to a center of the coil plate 411 and an outer positioning groove 4112 disposed adjacent to an outer circumferential edge of the coil plate 411, the inner positioning protrusion 4141 is fitted in the inner positioning groove 4111 and the outer positioning protrusion 4142 is fitted in the outer positioning groove 4112, such that the two ends of the magnetic stripe 414 can be positioned respectively, thereby further ensuring the stability and reliability of the magnetic stripe 414.

Specifically, as illustrated in the drawings, a plurality of magnetic stripes 414 are provided, the magnetic-stripe fixing frame 413 is provided with a plurality of magnetic-stripe positioning sleeves 4131, an inner connecting rib 4132 and an outer connecting rib 4133. Each magnetic-stripe positioning sleeve 4131 is provided with the magnetic-stripe mounting groove therein, inner ends of the plurality of magnetic-stripe positioning sleeves 4131 are connected and outer ends of the plurality of magnetic-stripe positioning sleeves 4131 are spaced apart from each other. The inner connecting rib 4132 is connected with the plurality of magnetic-stripe positioning sleeves 4131 respectively and is disposed adjacent to inner ends of the magnetic-stripe positioning sleeves 4131. The outer connecting rib 4133 is connected with the plurality of magnetic-stripe positioning sleeves 4131 respectively and is disposed adjacent to outer ends of the magnetic-stripe positioning sleeves 4131. The magnetic-stripe positioning sleeve 4131 may be provided with a consumption-reducing hole, such that it is convenient for the magnetic-stripe fixing frame 413 to be molded, a material cost of the magnetic-stripe fixing frame 413 is saved, and a stability of the magnetic-stripe fixing frame 413 is ensured, so as to ensure a fixing effect on the magnetic stripe 414.

Optionally, as illustrated in the drawings, an outer edge of the magnetic-stripe fixing frame 413 is provided with a relief groove 415 for escaping the supporting pillar 210, such that it is convenient to arrange the supporting pillar 210 and the relief groove 415 can be used to position the supporting pillar 210, further improving the stability of the supporting pillar 210 and the electromagnetic heating plate 410.

Advantageously, as illustrated in the drawings, an upper surface of the holder 420 is provided with a decoration cover 500, and the decoration cover 500 is provided with a through hole 510 for escaping the supporting pillar 210. Specifically, the decoration cover 500 may be provided with a pattern constituted by a protrusion and/or a depression. Thus, the decoration cover 500 may be used to decorate a top surface of the holder 420, such that an interior of the electric pressure cooker 1 is allowed to be more aesthetic when the inner pot 300 is taken out by the user. Moreover, since the through hole 510 is provided to the decoration cover 500, the supporting pillar 210 can be escaped, such that the supporting pillar 210 can support the inner pot 300 directly, thus preventing the decoration cover 500 from being pressured and damaged.

In a specific embodiment of the present disclosure, the supporting pillar 210 and the holder 420 are integrally molded, thereby simplifying the assembling process of the electric pressure cooker 1 and improving the production efficiency of the electric pressure cooker 1.

In another specific embodiment of the present disclosure, the supporting pillar 210 may be embedded and injection-molded to the holder 420, thereby achieving the mounting of the supporting pillar 210 as well.

Specifically, the supporting pillar 210 is mounted to the outer pot 100 through a screw or a bolt, thereby improving the stability of the supporting pillar 210.

A temperature-controller mounting hole 422 may be provided at a center of the bolder 420, such that a temperature controller may be mounted in the temperature-controller mounting hole 422, so as to detect a temperature in the inner pot 300.

In a specific embodiment of the present disclosure, the outer pot 100 may be an elastic part. By providing the supporting pillar 210, the supporting pillar 210 may be used to support the inner pot 300. When the pressure exerted on the supporting pillar 210 reaches the pre-determined value, the bottom wall of the outer pot 100 is deformed to move the inner pot 300 downwards, thereby releasing the pressure in the electric pressure cooker 1.

Other components and operations of the electric pressure cooker 1 according to embodiments of the present disclosure are known to those skilled in the art, which are not elaborated herein.

In the specification, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," and "counterclockwise" should be construed to refer to the orientation as then described or as shown in the drawings under discussion. These relative terms are for convenience of description and do not require that the present disclosure be constructed or operated in a particular orientation.

In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, "a plurality of" means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature; while a first feature "below," "under," or "on bottom of" a second feature may include an embodiment in which the first feature is right or obliquely "below," "under," or "on bottom of" the second feature, or just means that the first feature is at a height lower than that of the second feature.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments within the scope of the invention defined by the appended claims.

## Claims

1. An electric pressure cooker (1), comprising:
an outer pot (100) provided with a support rib (110) at a lower end of the outer pot (100);
a supporting member (200) disposed in the outer pot (100) and supported on the support rib (110);
an inner pot (300) disposed in the outer pot (100) and supported on the supporting member (200), and an outer bottom surface of the inner pot (300) being spaced apart from an inner bottom surface of the outer pot (100), under support of the supporting member (200); and
an electromagnetic heating device (400) configured to heat the inner pot (300), and disposed between the outer bottom surface of the inner pot (300) and the inner bottom surface of the outer pot (100),
**characterized in that**,
the electromagnetic heating device (400) comprises an electromagnetic heating plate (410), wherein the electromagnetic heating plate includes: a coil plate provided with a coil slot therein; a coil fitted in the coil slot; and a magnetic stripe disposed to the coil plate, and a projection of the electromagnetic heating plate (410) in a horizontal direction is staggered with a projection of the supporting member (200) in the horizontal direction.

2. The electric pressure cooker (1) according to claim 1, wherein the supporting member (200) is configured as a rigid supporting member (200),
wherein the rigid supporting member (200) preferably comprises a plurality of supporting pillars (210) arranged along a circumferential direction of the inner pot (300) and spaced apart from one another.

3. The electric pressure cooker (1) according to claim 2, wherein an outer circumferential edge of the outer bottom surface of the inner pot (200) is supported on the plurality of supporting pillars (210); and / or
wherein the rigid supporting member (200) further comprises a connecting ring extending in the circumferential direction of the inner pot (300) and respectively connected with the plurality of supporting pillars (210), and the electromagnetic heating device (400) is fitted in the connecting ring (220).

4. The electric pressure cooker (1) according to claim 3, wherein the plurality of supporting pillars (210) are connected to a lower surface of the connecting ring (220), and the inner pot (300) is supported on the connecting ring (220).

5. The electric pressure cooker (1) according to claim 2, wherein the rigid supporting member (220) is configured as an annular supporting boss extending in a circumferential direction of the inner pot (300), and the electromagnetic heating device (400) is fitted in the annular supporting boss (230); and / or
wherein an inner bottom wall of the outer pot (100) is provided with a supporting-member positioning groove, and the rigid supporting member (200) is fitted in the supporting-member positioning groove.

6. The electric pressure cooker (1) according to claim 1, further comprising a fan (700), wherein the housing is provided with an air inlet (611) and an air outlet (612), and the fan (700) is disposed between an inner surface of the housing (600) and an outer surface of the outer pot (100),
wherein a bottom wall of the outer pot (100) is preferably provided with a heat dissipation opening (120), and the fan (700) is preferably disposed between the bottom wall of the outer pot (100) and a bottom wall of the housing (600).

7. The electric pressure cooker (1) according to claim 6, wherein a sectional area of the heat dissipation opening (120) is larger than 1500 square millimeters; and / or
wherein a distance between the fan (700) and the bottom wall of the outer pot (100) is less than or equal to 150 millimeters; and / or
wherein an inner circumferential edge of the heat dissipation opening (120) is provided with an upper turn-up,
wherein a height of the upper turn-up in a vertical direction is preferably 1-15 millimeters.

8. The electric pressure cooker (1) according to claim 6, wherein a ventilation notch (130) is provided at a junction between a circumferential wall and a bottom wall of the outer pot (100),
wherein a depth of the ventilation notch (130) in a vertical direction is preferably less than 90 millimeters, and a width of the ventilation notch (130) in a circumferential direction of the outer pot (100) is preferably less than 200 millimeters.

9. The electric pressure cooker (1) according to claim 6, further comprising a power supply board (800), wherein the power supply board (800) is located between an outer circumferential wall of the outer pot (100) and an inner circumferential wall of the housing (600) and is disposed adjacent to the fan (700),
wherein an end of the power supply board (800) adjacent to the fan (700) is preferably provided with a cooling fin (810).

10. The electric pressure cooker (1) according to claim 9, wherein the power supply board (800) is oriented in the vertical direction, and the cooling fin (810) extends from the power supply board (800) to the housing (600); and / or
wherein the housing (600) is provided with a wind deflector (630), the wind deflector (630) is oriented in a vertical direction and spaced apart from the cooling fin (810),
wherein a distance between the wind deflector (630) and the cooling fin (810) is preferably less than or equal to 30 millimeters.

11. The electric pressure cooker (1) according to claim 6, wherein the fan (700) is located above the air inlet (611); and / or
wherein the housing (600) comprises a base (610), the air inlet (611) and the air outlet (612) both are provided to the base (610) and respectively adjacent to two ends of the base (610); and / or
wherein a bottom of the housing (600) is provided with a supporting foot (620), and a length of the supporting foot (620) away from a lower surface of the housing (600) is 1-75 millimeters.

12. The electric pressure cooker (1) according to claim 1, wherein an elastic member is provided below the supporting member (200), and the supporting member (200) is supported on the elastic member,
wherein the elastic member is preferably configured to be deformed when a pressure in the inner pot (300) reaches a pre-determined value, so as to release the pressure in the inner pot (300),
wherein the elastic member is preferably configured to be deformed to move the inner pot (300) downwards when the pressure in the inner pot (300) reaches the pre-determined value.

13. The electric pressure cooker (1) according to claim 12, wherein a circumferential wall of the outer pot (100) is provided with a circumferential-wall reinforcing rib (141), a bottom wall of the outer pot (100) is provided with a bottom-wall reinforcing rib (142), two ends of the elastic member are supported on the bottom-wall reinforcing rib (142) respectively and the supporting member (200) is supported at a center of the elastic member in a length direction of the elastic member; and / or
wherein the supporting member (200) is provided with a mounting hole (112), the outer pot (100) is provided with an outer-pot through hole, the elastic member is provided with an elastic-member through hole, and the supporting member (200) is mounted to the outer pot (100) through a threaded fastener fitted in the mounting hole (112), the outer-pot through hole and the elastic-member through hole.

14. The electric pressure cooker (1) according to claim 13, wherein the elastic member has a plate shape, and a width of the elastic member is gradually increased from two ends of the elastic member to a middle of the elastic member; and / or
wherein a height of the bottom-wall reinforcing rib (142) away from the bottom wall of the outer pot (100) is less than 30 millimeters.

15. The electric pressure cooker (1) according to claim 1, wherein the outer pot is formed by stamping a cold-rolled sheet, and a thickness of the cold-rolled sheet is 0.4-2 millimeters; and / or
,
wherein the electromagnetic heating plate (410) is preferably spaced apart from at least one of the inner bottom surface of the outer pot (100) and the outer bottom surface of the inner pot (300).

16. The electric pressure cooker (1) according to claim 15, wherein the electromagnetic heating plate (410) is spaced apart from the inner bottom surface of the outer pot (100) and the outer bottom surface of the inner pot (300) respectively, and is more adjacent to the outer bottom surface of the inner pot (300) with respect to the inner bottom surface of the outer pot (100); and / or
wherein the electromagnetic heating device (400) further comprises a holder (420), the holder (420) is disposed between the outer bottom surface of the inner pot (300) and the inner bottom surface of the outer pot (100), the supporting member (200) is disposed to the holder (420), and the electromagnetic heating plate (410) is provided to the holder (420).

17. The electric pressure cooker (1) according to claim 16, wherein the holder (420) is provided with mounting holes (112) spaced apart from one another in a circumferential direction of the holder (420), and the supporting member (200) is fitted in the mounting hole (112); and / or
wherein an upper surface of the holder (420) is provided with a decoration cover (500), and the decoration cover (500) is provided with a through hole (510) for escaping the supporting member (200).

18. The electric pressure cooker (1) according to claim 16, wherein the electromagnetic heating plate (410) further comprises a magnetic-stripe fixing frame (413), the magnetic-stripe fixing frame (413) is mounted to the coil plate (411), and the magnetic stripe is mounted to the magnetic-stripe fixing frame (413); wherein an outer edge of the magnetic-stripe fixing frame (413) is provided with a relief groove (415) for escaping the supporting member (200); and / or
wherein the coil plate (411) and the holder (420) are integrally molded; and / or
wherein the coil plate (411) is connected to the holder (420) through a threaded fastener.

19. The electric pressure cooker (1) according to claim 18, wherein the magnetic-stripe fixing frame (413) is provided with a magnetic-stripe mounting groove, the coil plate (411) is provided with a magnetic-stripe positioning groove, the magnetic stripe (414) is provided with a positioning protrusion, the magnetic stripe (414) is fitted in the magnetic-stripe mounting groove and the positioning protrusion is fitted in the magnetic-stripe positioning groove,
wherein the positioning protrusion preferably comprises an inner positioning protrusion (4141) and an outer positioning protrusion (4142) respectively located at two ends of the magnetic stripe (414), the magnetic-stripe positioning groove preferably comprises an inner positioning groove (4111) disposed adjacent to a center of the coil plate (411) and an outer positioning groove (4112) disposed adjacent to an outer circumferential edge of the coil plate (411), the inner positioning protrusion (4141) is preferably fitted in the inner positioning groove (4111) and the outer positioning protrusion (4142) is preferably fitted in the outer positioning groove (4112).

## Patentansprüche

1. Elektrischer Schnellkochtopf (1), umfassend:
einen Außentopf (100), der an einem unteren Ende des Außentopfes (100) mit einer Stützrippe (110) versehen ist;
ein Stützelement (200), das in dem Außentopf (100) angeordnet und auf der Stützrippe (110) gelagert ist;
einen Innentopf (300), der in dem Außentopf (100) angeordnet und auf dem Stützelement (200) gelagert ist, und eine äußere Bodenfläche des Innentopfes (300), die von einer inneren Bodenfläche des Außentopfes (100) beabstandet ist, unter Lagerung des Stützelements (200); und
eine elektromagnetische Heizvorrichtung (400), die dazu ausgebildet ist, den Innentopf (300) zu erwärmen, und die zwischen der äußeren Bodenfläche des Innentopfes (300) und der inneren Bodenfläche des Außentopfes (100) angeordnet ist,
**dadurch gekennzeichnet, dass**
die elektromagnetische Heizvorrichtung (400) eine elektromagnetische Heizplatte (410) umfasst, wobei die elektromagnetische Heizplatte Folgendes beinhaltet: eine Spulenplatte (411), die mit einem Spulenschlitz darin versehen ist; eine Spule, die in dem Spulenschlitz eingepasst ist; und einen Magnetstreifen (414), der an der Spulenplatte angeordnet ist, und eine Projektion der elektromagnetischen Heizplatte (410) in einer horizontalen Richtung mit einer Projektion des Stützelements (200) in horizontaler Richtung versetzt ist.

2. Elektrischer Schnellkochtopf (1) gemäß Anspruch 1, wobei das Stützelement (200) als starres Stützelement (200) ausgebildet ist,
wobei das starre Stützelement (200) vorzugsweise mehrere Stützsäulen (210) umfasst, die entlang einer Umfangsrichtung des Innentopfes (300) angeordnet und voneinander beabstandet sind.

3. Elektrischer Schnellkochtopf (1) gemäß Anspruch 2, wobei eine äußere Umfangskante der äußeren Bodenfläche des Innentopfes (300) auf den mehreren Stützpfeilern (210) gelagert ist; und/oder
wobei das starre Stützelement (200) ferner einen Verbindungsring (220) umfasst, der sich in Umfangsrichtung des Innentopfes (300) erstreckt und jeweils mit der Vielzahl von Stützpfeilern (210) verbunden ist, und die elektromagnetische Heizvorrichtung (400) in dem Verbindungsring (220) eingepasst ist.

4. Elektrischer Schnellkochtopf (1) gemäß Anspruch 3, wobei die mehreren Stützpfeiler (210) mit einer Unterseite des Verbindungsrings (220) verbunden sind und der Innentopf (300) auf dem Verbindungsring (220) gelagert ist.

5. Elektrischer Schnellkochtopf (1) gemäß Anspruch 2, wobei das starre Stützelement (200) als ringförmiger Stützvorsprung (230) ausgebildet ist, der sich in Umfangsrichtung des Innentopfes (300) erstreckt, und die elektromagnetische Heizvorrichtung (400) in dem ringförmigen Stützvorsprung (230) angebracht ist; und / oder
wobei eine innere Bodenwand des Außentopfes (100) mit einer Stützelement-Positionierungsnut versehen ist und das starre Stützelement (200) in der Stützelement-Positionierungsnut eingepasst ist.

6. Elektrischer Schnellkochtopf (1) gemäß Anspruch 1, ferner umfassend einen Ventilator (700), wobei das Gehäuse (600) mit einem Lufteinlass (611) und einem Luftauslass (612) versehen ist und der Ventilator (700) zwischen einer Innenfläche des Gehäuses (600) und einer Außenfläche des Außentopfes (100) angeordnet ist,
wobei eine Bodenwand des Außentopfes (100) bevorzugt mit einer Wärmeableitungsöffnung (120) versehen ist und der Ventilator (700) bevorzugt zwischen der Bodenwand des Außentopfes (100) und einer Bodenwand des Gehäuses (600) angeordnet ist.

7. Elektrischer Schnellkochtopf (1) gemäß Anspruch 6, wobei eine Querschnittsfläche der Wärmeableitungsöffnung (120) größer als 1500 Quadratmillimeter ist; und/oder
wobei ein Abstand zwischen dem Ventilator (700) und der Bodenwand des Außentopfes (100) kleiner oder gleich 150 Millimeter ist, und / oder
wobei eine innere Umfangskante der Wärmeableitungsöffnung (120) mit einem oberen Aufschlag versehen ist,
wobei eine Höhe des oberen Aufschlags in einer vertikalen Richtung bevorzugt 1 bis 15 Millimeter beträgt.

8. Elektrischer Schnellkochtopf (1) gemäß Anspruch 6, wobei eine Belüftungskerbe (130) an einer Verbindungsstelle zwischen einer Umfangswand und einer Bodenwand des Außentopfes (100) vorgesehen ist, wobei eine Tiefe der Belüftungskerbe (130) in einer vertikalen Richtung bevorzugt weniger als 90 Millimeter und eine Breite der Belüftungskerbe (130) in einer Umfangsrichtung des Außentopfes (100) bevorzugt weniger als 200 Millimeter beträgt.

9. Elektrischer Schnellkochtopf (1) gemäß Anspruch 6, ferner umfassend eine Stromversorgungsplatine (800), wobei sich die Stromversorgungsplatine (800) zwischen einer Außenumfangswand des Außentopfes (100) und einer Innenumfangswand des Gehäuses (600) befindet und neben dem Ventilator (700) angeordnet ist,
wobei ein dem Ventilator (700) benachbartes Ende der Stromversorgungsplatine (800) bevorzugt mit einer Kühlrippe (810) versehen ist.

10. Elektrischer Schnellkochtopf (1) gemäß Anspruch 9, wobei die Stromversorgungsplatine (800) in vertikaler Richtung ausgerichtet ist und sich die Kühlrippe (810) von der Stromversorgungsplatine (800) zum Gehäuse(600) erstreckt; und / oder
wobei das Gehäuse (600) mit einem Windabweiser (630) versehen ist, der Windabweiser (630) in einer vertikalen Richtung ausgerichtet und von der Kühlrippe (810) beabstandet ist,
wobei ein Abstand zwischen dem Windabweiser (630) und der Kühlrippe (810) bevorzugt kleiner oder gleich 30 Millimeter ist.

11. Elektrischer Schnellkochtopf (1) gemäß Anspruch 6, wobei sich der Ventilator (700) über dem Lufteinlass (611) befindet, und / oder
wobei das Gehäuse (600) eine Basis (610) umfasst, der Lufteinlass (611) und der Luftauslass (612) beide der Basis (610) vorgesehen sind und jeweils neben zwei Enden der Basis (610) sind, und / oder
wobei ein Boden des Gehäuses (600) mit einem Stützfuß (620) versehen ist und eine Länge des Stützfußes (620) von einer Unterseite des Gehäuses (600) entfernt 1 bis 75 Millimeter beträgt.

12. Elektrischer Schnellkochtopf (1) gemäß Anspruch 1, wobei ein elastisches
Element unterhalb des Stützelements (200) vorgesehen ist und das Stützelement (200) auf dem elastischen Element gelagert ist,
wobei das elastische Element bevorzugt so ausgebildet ist, dass es verformt wird, wenn ein Druck im Innentopf (300) einen vorbestimmten Wert erreicht, um den Druck im Innentopf (300) abzulassen,
wobei das elastische Element bevorzugt so ausgebildet ist, dass es verformt wird, um den Innentopf (300) nach unten zu bewegen, wenn der Druck im Innentopf (300) den vorbestimmten Wert erreicht.

13. Elektrischer Schnellkochtopf (1) gemäß Anspruch 12, wobei eine Umfangswand des Außentopfes (100) mit einer Umfangswandverstärkungsrippe (141) versehen ist, eine Bodenwand des Außentopfes (100) mit einer Bodenwandverstärkungsrippe (142) versehen ist, zwei Enden des elastischen Elements jeweils auf der Bodenwandverstärkungsrippe (142) gelagert sind und das Stützelement (200) in einer Mitte des elastischen Elements in einer Längsrichtung des elastischen Elements gelagert ist; und / oder
wobei das Stützelement (200) mit einem Montageloch (112) versehen ist, der Außentopf (100) mit einem Außentopf-Durchgangsloch versehen ist, das elastische Element mit einem Elastikelement-Durchgangsloch versehen ist und das Stützelement (200) am Außentopf (100) durch eine Befestigungsschraube montiert ist, die in das Montageloch (112), das Außentopf-Durchgangsloch und das Elastikelement-Durchgangsloch eingepasst ist.

14. Elektrischer Schnellkochtopf (1) gemäß Anspruch 13, wobei das elastische Element eine Plattenform aufweist und eine Breite des elastischen Elements allmählich von zwei Enden des elastischen Elements zu einer Mitte des elastischen Elements vergrößert wird; und / oder.
wobei eine Höhe der Bodenwandverstärkungsrippe (142) von der Bodenwand des Außentopfes (100) entfernt weniger als 30 Millimeter beträgt.

15. Elektrischer Schnellkochtopf (1) gemäß Anspruch 1, wobei der Außentopf durch Stanzen eines kaltgewalzten Blechs gebildet wird und eine Dicke des kaltgewalzten Blechs 0,4 bis 2 Millimeter beträgt; und / oder
wobei die elektromagnetische Heizplatte (410) bevorzugt von mindestens einer der inneren Bodenfläche des Außentopfes (100) und der äußeren Bodenfläche des Innentopfes (300) beabstandet ist.

16. Elektrischer Schnellkochtopf (1) gemäß Anspruch 15, wobei die elektromagnetische Heizplatte (410) von der inneren Bodenfläche des Außentopfes (100) bzw. der äußeren Bodenfläche des Innentopfes (300) beabstandet ist und zu der äußeren Bodenfläche des Innentopfes (300) enger benachbart ist in Bezug auf die innere Bodenfläche des Außentopfes (100); und / oder
wobei die elektromagnetische Heizvorrichtung (400) ferner einen Halter (420) umfasst, der Halter (420) zwischen der äußeren Bodenfläche des Innentopfes (300) und der inneren Bodenfläche des Außentopfes (100) angeordnet ist, das Stützelement (200) an dem Halter (420) angeordnet ist und die elektromagnetische Heizplatte (410) dem Halter (420) vorgesehen ist.

17. Elektrischer Schnellkochtopf (1) gemäß Anspruch 16, wobei der Halter (420) mit Montagelöchern (112) versehen ist, die in Umfangsrichtung des Halters (420) voneinander beabstandet sind, und das Stützelement (200) in das Montageloch (112) eingepasst ist; und / oder
wobei eine Oberseite des Halters (420) mit einer Dekorationsabdeckung (500) versehen ist und die Dekorationsabdeckung (500) mit einem Durchgangsloch (510) versehen ist, um dem Stützelement auszuweichen.

18. Elektrischer Schnellkochtopf (1) gemäß Anspruch 16, wobei die elektromagnetische Heizplatte (410) ferner einen Magnetstreifen-Befestigungsrahmen (413) umfasst, der Magnetstreifen-Befestigungsrahmen (413) an der Spulenplatte (411) angebracht ist und der Magnetstreifen an dem Magnetstreifen-Befestigungsrahmen (413) angebracht ist, wobei eine Außenkante des Magnetstreifen-Befestigungsrahmens (413) mit einer Entlastungsnut (415) versehen ist, um dem Stützelement (200) auszuweichen;
und / oder
wobei die Spulenplatte (411) und der Halter (420) einstückig geformt sind: und / oder
wobei die Spulenplatte (411) über eine Befestigungsschraube mit dem Halter (420) verbunden ist.

19. Elektrischer Schnellkochtopf (1) gemäß Anspruch 18, wobei der Magnetstreifen-Befestigungsrahmen (413) mit einer Magnetstreifen-Montagenut versehen ist, die Spulenplatte (411) mit einer Magnetstreifen-Positionierungsnut versehen ist, der Magnetstreifen (414) mit einem Positionierungsvorsprung versehen ist, der Magnetstreifen (414) in der Magnetstreifen-Montagenut eingepasst ist, und der Positionierungsvorsprung in der Magnetstreifen-Positionierungsnut eingepasst ist,
wobei der Positionierungsvorsprung bevorzugt einen inneren Positionierungsvorsprung (4141) und einen äußeren Positionierungsvorsprung (4142) umfasst, die jeweils an zwei Enden des Magnetstreifens (414) angeordnet sind, die Magnetstreifen-Positionierungsnut bevorzugt eine innere Positionierungsnut (4111), die neben einer Mitte der Spulenplatte (411) angeordnet ist, und eine äußere Positionierungsnut (4112), die neben einer äußeren Umfangskante der Spulenplatte (411) angeordnet ist, umfasst, der innere Positionierungsvorsprung (4141) bevorzugt in der inneren Positionierungsnut (4111) eingepasst ist und der äußere Positionierungsvorsprung (4142) bevorzugt in der äußeren Positionierungsnut (4112) angebracht ist.

## Revendications

1. Autocuiseur électrique (1) comprenant :
un récipient extérieur (100) doté d'une nervure de support (110) à une extrémité inférieure du récipient extérieur (100) ;
un élément de support (200) disposé dans le récipient extérieur (100) et supporté sur la nervure de support (110) ;
un récipient intérieur (300) disposé dans le récipient extérieur (100) et supporté sur l'élément de support (200), et une surface inférieure extérieure du récipient intérieur (300) étant espacée de la surface inférieure intérieure du récipient extérieur (100), avec le support de l'élément de support (200) ; et
un dispositif de chauffage électromagnétique (400) configuré pour chauffer le récipient intérieur (300), et disposé entre la surface inférieure extérieure du récipient intérieur (300) et la surface inférieure intérieure du récipient extérieur (100),
**caractérisé en ce que**
le dispositif de chauffage électromagnétique (400) comprend une plaque chauffante électromagnétique (410), la plaque chauffante électromagnétique (411) comprenant : une plaque de bobine dotée d'une fente de bobine ; une bobine ajustée dans la fente de bobine ; et un ruban magnétique (414) disposé dans la plaque de bobine, et une saillie de la plaque chauffante électromagnétique (410) dans une direction horizontale est décalée par rapport à une saillie de l'élément de support (200) dans la direction horizontale.

2. Autocuiseur électrique (1) selon la revendication 1, dans lequel l'élément de support (200) est configuré comme un élément de support rigide (200),
dans lequel l'élément de support rigide (200) comprend de préférence une pluralité de montants de support (210) disposés le long d'une direction circonférentielle du récipient intérieur (300) et espacés les uns des autres.

3. Autocuiseur électrique (1) selon la revendication 2, dans lequel un bord circonférentiel extérieur de la surface inférieure extérieure du récipient intérieur (300) est supporté sur la pluralité de montants de support (210) ; et/ou
dans lequel l'élément de support rigide (200) comprend en outre une bague de connexion (220) s'étendant dans la direction circonférentielle du récipient intérieur (300) et respectivement reliée à la pluralité de montants de support (210), et le dispositif de chauffage électromagnétique (400) est ajusté dans la bague de connexion (220).

4. Autocuiseur électrique (1) selon la revendication 3, dans lequel la pluralité de montants de support (210) sont reliés à une surface inférieure de la bague de connexion (220), et le récipient intérieur (300) est supporté sur la bague de connexion (220).

5. Autocuiseur électrique (1) selon la revendication 2, dans lequel l'élément de support rigide (200) est configuré comme un bossage de support (230) annulaire s'étendant dans une direction circonférentielle du récipient intérieur (300), et le dispositif de chauffage électromagnétique (400) est ajusté dans le bossage de support annulaire (230) ; et/ou
dans lequel une paroi inférieure intérieure du récipient extérieur (100) est dotée d'une rainure de positionnement d'élément de support, et l'élément de support rigide (200) est ajusté dans la rainure de positionnement d'élément de support.

6. Autocuiseur électrique (1) selon la revendication 1, comprenant en outre un ventilateur (700), dans lequel le logement (600) est doté d'une entrée d'air (611) et d'une sortie d'air (612), et le ventilateur (700) est disposé entre une surface intérieure du logement (600) et une surface extérieure du récipient extérieur (100),
dans lequel une paroi inférieure du récipient extérieur (100) est de préférence dotée d'une ouverture de dissipation de chaleur (120), et le ventilateur (700) est disposé de préférence entre la paroi inférieure du récipient extérieur (100) et la paroi inférieure du logement (600).

7. Autocuiseur électrique (1) selon la revendication 6, dans lequel une section transversale de l'ouverture de dissipation de chaleur (120) est supérieure à 1500 millimètres carrés ; et/ou
dans lequel une distance entre le ventilateur (700) et la paroi inférieure du récipient extérieur (100) est inférieure ou égale à 150 millimètres ; et/ou
dans lequel un bord circonférentiel intérieur de l'ouverture de dissipation de chaleur (120) est doté d'un revers supérieur,
dans lequel une hauteur du revers supérieur dans une direction verticale est de préférence comprise entre 1 et 15 millimètres.

8. Autocuiseur électrique (1) selon la revendication 6, dans lequel une encoche de ventilation (130) est prévue à une jonction entre une paroi circonférentielle et une paroi inférieure du récipient extérieur (100),
dans lequel une profondeur de l'encoche de ventilation (130) dans une direction verticale est de préférence inférieure à 90 millimètres, et une largeur de l'encoche de ventilation (130) dans une direction circonférentielle du récipient extérieur (100) est de préférence inférieure à 200 millimètres.

9. Autocuiseur électrique (1) selon la revendication 6, comprenant en outre un bloc d'alimentation en puissance (800), dans lequel le bloc d'alimentation en puissance (800) se trouve entre une paroi circonférentielle extérieure du récipient extérieur (100) et une paroi circonférentielle intérieure du logement (600), tout en étant disposé à côté du ventilateur (700),
dans lequel une extrémité du bloc d'alimentation en puissance (800) adjacente au ventilateur (700) est de préférence dotée d'une ailette de refroidissement (810).

10. Autocuiseur électrique (1) selon la revendication 9, dans lequel le bloc d'alimentation en puissance (800) est orienté dans la direction verticale, et l'ailette de refroidissement (810) s'étend à partir du bloc d'alimentation en puissance (800) vers le logement (600) ; et/ou
dans lequel le logement (600) est doté d'un déflecteur de vent (630), le déflecteur de vent (630) étant orienté dans une direction verticale et espacé de l'ailette de refroidissement (810),
dans lequel une distance entre le déflecteur de vent (630) et l'ailette de refroidissement (810) est de préférence inférieure ou égale à 30 millimètres.

11. Autocuiseur électrique (1) selon la revendication 6, dans lequel le ventilateur (700) se trouve au-dessus de l'entrée d'air (611) ; et/ou
dans lequel le logement (600) comprend une base (610), l'entrée d'air (611) et la sortie d'air (612) sont toutes deux disposées au niveau de la base (610) et respectivement adjacentes à deux extrémités de la base (610) ; et/ou
dans lequel un fond du logement (600) est doté d'un pied de support (620), et une longueur du pied de support (620) à distance d'une surface inférieure du logement (600) mesure entre 1 et 75 millimètres.

12. Autocuiseur électrique (1) selon la revendication 1, dans lequel un élément élastique est prévu sous l'élément de support (200), et l'élément de support (200) est supporté sur l'élément élastique,
dans lequel l'élément élastique est de préférence configuré pour être déformé lorsqu'une pression dans le récipient intérieur (300) atteint une valeur prédéterminée, de manière à relâcher la pression dans le récipient intérieur (300),
dans lequel l'élément élastique est de préférence configuré pour être déformé afin de déplacer le récipient intérieur (300) vers le bas lorsque la pression dans le récipient intérieur (300) atteint la valeur prédéterminée.

13. Autocuiseur électrique (1) selon la revendication 12, dans lequel une paroi circonférentielle du récipient extérieur (100) est doté d'une nervure de renforcement de paroi circonférentielle (141), une paroi inférieure du récipient extérieur (100) est dotée d'une nervure de renforcement de paroi inférieure (142), deux extrémités de l'élément élastique sont supportées sur la nervure de renforcement de paroi inférieure (142) respectivement et l'élément de support (200) est supporté au niveau d'un centre de l'élément élastique dans une direction longitudinale de l'élément élastique ; et/ou
dans lequel l'élément de support (200) est doté d'un trou de montage (112), le récipient extérieur (100) est doté d'un trou de passage de récipient extérieur, l'élément élastique est doté d'un trou de passage d'élément élastique, et l'élément de support (200) est monté sur le récipient extérieur (100) par le biais d'un moyen de fixation fileté ajusté dans le trou de montage (112), le trou de passage de récipient extérieur et le trou de passage d'élément élastique.

14. Autocuiseur électrique (1) selon la revendication 13, dans lequel l'élément élastique présente une forme de plaque, et une largeur de l'élément élastique augmente progressivement à partir de deux extrémités de l'élément élastique vers un milieu de l'élément élastique ; et/ou
dans lequel une hauteur de la nervure de renforcement de paroi inférieure (142) à distance de la paroi inférieure du récipient extérieur (100) est inférieure à 30 millimètres.

15. Autocuiseur électrique (1) selon la revendication 1, dans lequel le récipient extérieur est formé par emboutissage d'une tôle laminée à froid, et une épaisseur de la tôle laminée à froid mesure de 0,4 à 2 millimètres ; et/ou
dans lequel la plaque chauffante électromagnétique (410) est de préférence espacée de l'une au moins parmi la surface inférieure intérieure du récipient extérieur (100) et la surface inférieure extérieure du récipient intérieur (300).

16. Autocuiseur électrique (1) selon la revendication 15, dans lequel la plaque chauffante électromagnétique (410) est espacée de la surface inférieure intérieure du récipient extérieur (100) et de la surface inférieure extérieure du récipient intérieur (300) respectivement, et plus proche de la surface inférieure extérieure du récipient intérieur (300) que de la surface inférieure intérieure du récipient extérieur (100) ; et/ou
dans lequel le dispositif de chauffage électromagnétique (400) comprend en outre un dispositif de maintien (420), le dispositif de maintien (420) est disposé entre la surface inférieure extérieure du récipient intérieur (300) et la surface inférieure intérieure du récipient extérieur (100), l'élément de support (200) est disposé sur le dispositif de maintien (420), et la plaque chauffante électromagnétique (410) est disposée sur le dispositif de maintien (420).

17. Autocuiseur électrique (1) selon la revendication 16, dans lequel le dispositif de maintien (420) est doté de trous de montage (112) espacés les uns des autres dans une direction circonférentielle du dispositif de maintien (420), et l'élément de support (200) est ajusté dans le trou de montage (112) ; et/ou
dans lequel une surface supérieure du dispositif de maintien (420) est dotée d'un revêtement décoratif (500), et le revêtement décoratif (500) est doté d'un trou de passage (510) pour échapper à l'élément de support (200).

18. Autocuiseur électrique (1) selon la revendication 16, dans lequel la plaque chauffante électromagnétique (410) comprend en outre un cadre de fixation de ruban magnétique (413), le cadre de fixation de ruban magnétique (413) est monté sur la plaque de bobine (411), et le ruban magnétique est monté sur le cadre de fixation de ruban magnétique (413) ; dans lequel un bord extérieur du cadre de fixation de ruban magnétique (413) est doté d'une rainure de dégagement (415) pour échapper à l'élément de support (200) ; et/ou
dans lequel la plaque de bobine (411) et le dispositif de maintien (420) sont moulés intégralement ; et/ou
dans lequel la plaque de bobine (411) est reliée au dispositif de maintien (420) par le biais d'un moyen de fixation fileté.

19. Autocuiseur électrique (1) selon la revendication 18, dans lequel le cadre de fixation de ruban magnétique (413) est doté d'une rainure de montage de ruban magnétique, la plaque de bobine (411) est dotée d'une rainure de positionnement de ruban magnétique, le ruban magnétique (414) est doté d'une saillie de positionnement, le ruban magnétique (414) est ajusté dans la rainure de montage de ruban magnétique et la saillie de positionnement est ajustée dans la rainure de positionnement de ruban magnétique,
dans lequel la saillie de positionnement comprend de préférence une saillie de positionnement intérieure (4141) et une saillie de positionnement extérieure (4142) respectivement situées à deux extrémités du ruban magnétique (414), la rainure de positionnement de ruban magnétique comprend de préférence une rainure de positionnement intérieure (4111) disposée à côté d'un centre de la plaque de bobine (411) et une rainure de positionnement extérieure (4112) disposée à côté d'un bord circonférentiel extérieur de la plaque de bobine (411), la saillie de positionnement intérieure (4141) est de préférence ajustée dans la rainure de positionnement intérieure (4111) et la saillie de positionnement extérieure (4142) est de préférence ajustée dans la rainure de positionnement extérieure (4112).
